# EUROPEAN PATENT APPLICATION

(11) **EP 3 677 510 A2**
(43) Date of publication of application: **08.07.2020**
(21) Application number: 20155358.3
(22) Date of filing: 16.07.2014
(51) Int. Cl.: B64D 27/24, G05D 1/00, B64C 39/02

(54) **AN ELECTRIC UNMANNED AERIAL VEHICLE AND A METHOD OF PROTECTING OF THE ELECTRIC UNMANNED AERIAL VEHICLE**

(62) Divisional of application: 14897514.7
(71) Applicant: SZ DJI Technology Co., Ltd., Shenzhen, Guangdong 518057 (CN)
(72) Inventor: SHI, Renli, Shenzhen, Guangdong 518057 (CN); SONG, Jianyu, Shenzhen, Guangdong 518057 (CN); CHEN, Xi, Shenzhen, Guangdong 518057 (CN)
(74) Representative: Goddar, Heinz J.

(57) **Abstract**

The present disclosure discloses an intelligent method of protecting an electric capacity for an electric unmanned aerial vehicle. The method comprises: obtaining a remaining capacity of a battery in real-time; obtaining a coordinate information of a present position of the electric unmanned aerial vehicle in real-time, and calculating a safety electric capacity needed by the electric unmanned aerial vehicle to perform a safety protection command at the present position based on the coordinate information of the present position of the electric unmanned aerial vehicle; determining whether the remaining capacity is greater than the safety electric capacity; and performing a corresponding safety protection command if the remaining capacity is not greater than the safety electric capacity. The intelligent method of protecting an electric capacity for an electric unmanned aerial vehicle serves to protect the electric unmanned aerial vehicle in real-time, in an effective and intelligent manner, and to prevent an accident due to an insufficient electric capacity, and to improve a utilization of a battery. The present disclosure also provides an electric unmanned aerial vehicle in which the above-described method can be performed.

## Description

### TECHNICAL FIELD

The present disclosure relates to an unmanned aerial vehicle, and in particular, to an electric unmanned aerial vehicle and an intelligent method of protecting an electric capacity of the electric unmanned aerial vehicle.

### BACKGROUND OF THE DISCLOSURE

In traditional electric unmanned aerial vehicles, an electric capacity of a battery can be prompted to a user in two ways: presenting a real-time voltage value of the battery, or presenting a real-time percentage of a remaining battery electric capacity.

Extensive experience is required to determine a remaining capacity of a battery from a voltage value of the battery, thus only those skilled are able to determine a state of the battery from a voltage value of the battery. The remaining capacity of the battery can be determined from a percentage of a remaining capacity of the battery in an intuitive manner. When the battery is in a low voltage state or an exhausted state, an alarming device can alarm. For example, a LED lamp can flash a red light, or a beeper can emit sound.

The conventional low voltage alarms are implemented by determining whether the battery reaches a preset low voltage value based on a fixed reference voltage value. For a beginner of using an unmanned aerial vehicle in aerial photography, an alarm of battery electric capacity cannot be received if an electric unmanned aerial vehicle flies to a remote position. In addition, it can be difficult to calculate the needed electric capacity for the electric unmanned aerial vehicle to return to an initial point from the present position. Consequently, the electric unmanned aerial vehicles can crash in a return trip, or be forced to return earlier than necessary, resulting in a lower battery utilization.

### SUMMARY OF THE DISCLOSURE

In view of above problems in the art, there is a need to provide an intelligent method of protecting an electric capacity for an electric unmanned aerial vehicle. The intelligent method can protect the electric unmanned aerial vehicle in a real-time, effective and intelligent manner, prevent accidents due to an insufficient electric capacity, and improve a utilization of a battery.

An intelligent method of protecting an electric capacity for an electric unmanned aerial vehicle is provided. The method can comprise: obtaining a remaining capacity of a battery in real-time; obtaining a coordinate information of a present position of the electric unmanned aerial vehicle in real-time, and calculating a safety electric capacity needed by the electric unmanned aerial vehicle to perform a safety protection command at the present position based on the coordinate information of the present position of the electric unmanned aerial vehicle; determining whether the remaining capacity is greater than the safety electric capacity; and performing a corresponding safety protection command if the remaining capacity is not greater than the safety electric capacity.

Advantages of the above-described intelligent methods of protecting an electric capacity for an electric unmanned aerial vehicle can at least include the followings
(1) With the above-described intelligent method of protecting an electric capacity for an electric unmanned aerial vehicle, a safety electric capacity needed by the electric unmanned aerial vehicle to perform a safety protection command at a present position can be calculated by obtaining a coordinate information of the present position of the electric unmanned aerial vehicle in real-time. If the remaining capacity of the battery is not greater than the safety electric capacity, a corresponding safety protection command can be immediately performed, such that the electric unmanned aerial vehicle can be protected in real-time, and prevented from accidents due to an insufficient electric capacity of the electric unmanned aerial vehicle.
(2) With the above-described intelligent method of protecting an electric capacity for an electric unmanned aerial vehicle, a determination can be automatically made on whether a safety protection command is to be performed based on a comparison of the safety electric capacity of the present position with the remaining capacity of the battery. The user is free of determining based on his/her experience, such that the electric unmanned aerial vehicle can be protected more effectively and intelligently with the above-described intelligent method of protecting an electric capacity.
(3) With the above-described intelligent method of protecting an electric capacity for an electric unmanned aerial vehicle, the safety electric capacity can be updated in real-time based on the coordinate information of the present position. The electric unmanned aerial vehicle does not perform an early return flight or an early landing, such that a utilization of the battery can be improved.

In some embodiments, the safety electric capacity can comprise at least one of an electric capacity needed by the electric unmanned aerial vehicle to return from the present position to a preset position, an electric capacity needed by the electric unmanned aerial vehicle to land from the present position, or an electric capacity needed by the electric unmanned aerial vehicle to deploy a safety device. The safety protection command can comprise at least one of a command of returning to the preset position, a command of landing from the present position, or a command of deploying the safety device.

In some embodiments, the process of calculating the electric capacity needed by the electric unmanned aerial vehicle to land from the present position can comprises: obtaining a total capacity of the battery and a time of flight, and calculating an electric capacity consumption rate of the battery under current flight parameters; calculating a vertical height of the electric unmanned aerial vehicle from the present position to a take-off point based on the coordinate information of the present position and a coordinate information of the take-off point; calculating a time needed by the electric unmanned aerial vehicle to land from the present position based on the vertical height; and calculating the electric capacity needed by the electric unmanned aerial vehicle to land from the present position based on (1) the electric capacity consumption rate of the battery under current flight parameters and (2) the time needed by the electric unmanned aerial vehicle to land from the present position.

In some embodiments, the electric capacity needed by the electric unmanned aerial vehicle to land from the present position can comprise a reserved electric capacity.

In some embodiments, a path of the electric unmanned aerial vehicle to return from the present position to the preset position can be one of an original flight path, a linear path in a horizontal direction and a linear path in a vertical direction between the present position and the preset position, or a linear path between the present position and the preset position.

In some embodiments, in the process of calculating the electric capacity needed by the electric unmanned aerial vehicle to return from the present position to the preset position, the electric unmanned aerial vehicle can automatically select a return path according to a preset criterion, and calculates an electric capacity needed by the electric unmanned aerial vehicle to return from the present position to the preset position along the selected return path.

In some embodiments, the preset criterion can comprise at least one of a path having the least electric capacity consumption, a path having the shortest return trip, or a path having the least velocity changes.

In some embodiments, the preset criterion can be a path having the least electric capacity consumption, and the process of calculating the electric capacity needed by the electric unmanned aerial vehicle to return from the present position to the preset position can further comprises: calculating an electric capacity consumption of the electric unmanned aerial vehicle along various paths from the present position to the preset position; and calculating an return path electric capacity consumption of different paths, the return path electric capacity consumption comprising an electric capacity consumption corresponding to a path, and automatically selecting a path having the least return path electric capacity consumption as the return path.

In some embodiments, a path of the electric unmanned aerial vehicle to return from the present position to the preset position can be automatically set or set by a user.

In some embodiments, the process of calculating the electric capacity needed by the electric unmanned aerial vehicle to return from the present position to the preset position can comprises: obtaining a total capacity of the battery and a time of flight, and calculating an electric capacity consumption rate of the battery under current flight parameters; calculating a horizontal distance and a vertical height of the electric unmanned aerial vehicle to return from the present position to the preset position based on the coordinate information of the present position and the coordinate information of the preset position; calculating a time needed by the electric unmanned aerial vehicle to return from the present position to the preset position based on the horizontal distance and the vertical height; and calculating the electric capacity needed by the electric unmanned aerial vehicle to return from the present position to the preset position based on (1) the electric capacity consumption rate of the battery under current flight parameters, and (2) the time needed by the electric unmanned aerial vehicle to return from the present position to the preset position.

In some embodiments, the process of calculating the electric capacity needed by the electric unmanned aerial vehicle to return from the present position to the preset position can comprise calculating an electric capacity needed for the horizontal distance and calculating an electric capacity needed for the vertical height, the electric capacity needed for the horizontal distance can comprise a first reserved electric capacity, and the electric capacity needed for the vertical height can comprise a second reserved electric capacity.

In some embodiments, the preset position can be a waypoint in a flight path which is recorded by the electric unmanned aerial vehicle, the process of calculating the electric capacity needed by the electric unmanned aerial vehicle to return from the present position to the preset position can comprise: obtaining a total capacity of the battery and a time of flight, and calculating an electric capacity consumption rate of the battery under current flight parameters; calculating a total distance for the electric unmanned aerial vehicle to return from the present position to the preset position along the original flight path based on the coordinate information of the present position and the coordinate information of the preset position; calculating a time needed by the electric unmanned aerial vehicle to return from the present position to the preset position along the original flight path based on the total distance of the electric unmanned aerial vehicle to return from the present position to the preset position along the original flight path; and calculating an electric capacity needed by the electric unmanned aerial vehicle to return from the present position to the preset position along the original flight path based on (1) the electric capacity consumption rate of the battery under current flight parameters, and (2) the time needed by the electric unmanned aerial vehicle to return from the present position to the preset position along the original flight path.

In some embodiments, the electric capacity needed by the electric unmanned aerial vehicle to return from the present position to the preset position along the original flight path can comprise a reserved electric capacity.

In some embodiments, a time needed by the electric unmanned aerial vehicle during landing can be calculated based on a total descending height and a descending velocity of the electric unmanned aerial vehicle; and in the process of descending, the vertical velocity of the electric unmanned aerial vehicle can vary at a plurality of preset heights.

In some embodiments, the plurality of preset heights can comprise a first preset height and a second preset height; the electric unmanned aerial vehicle can descend to the first preset height at a uniform velocity, gradually decelerate and descend to the second preset height, and descend to the ground at a uniform velocity.

In some embodiments, the first preset height and the second preset height can be measured by a distance-measuring sensor carried by the electric unmanned aerial vehicle, or set by a user in advance according to the total descending height.

In some embodiments, the electric capacity consumption rate of the battery under the present flight parameters can be obtained by measuring the remaining capacity multiple times at a preset time interval Δt and averaging the plurality of measurements. An electric capacity consumption rate at the n^{th} preset time interval Δt is (Q1-Qn) /n × Δt, where Q1 is the total capacity of the battery, and Qn is a remaining capacity of the battery as measured after the n^{th} preset time interval Δ t.

In some embodiments, the preset position can be a take-off point of the electric unmanned aerial vehicle or a target point specified by a user.

In some embodiments, the remaining capacity of the battery is calculated by subtracting a preset electric capacity from an actual remaining capacity of the battery, and the preset electric capacity is used as a compensation for a computing error of the safety electric capacity.

In some embodiments, the remaining capacity of the battery can be obtained by sampling a voltage with an AD sampling circuit and/or by measuring a current with a current meter.

The present disclosure provides an intelligent method of protecting an electric capacity for an electric unmanned aerial vehicle.

The intelligent method of protecting an electric capacity for an electric unmanned aerial vehicle can comprise: obtaining a remaining capacity of a battery in real-time; obtaining a coordinate information of a present position of the electric unmanned aerial vehicle in real-time, and calculating an electric capacity needed by the electric unmanned aerial vehicle to land from the present position and an electric capacity needed by the electric unmanned aerial vehicle to return from the present position to a preset position based on the coordinate information of the present position of the electric unmanned aerial vehicle and a coordinate information of the preset position; determining whether the remaining capacity is greater than the electric capacity needed by the electric unmanned aerial vehicle to land from the present position; automatically performing a command of landing from the present position if the remaining capacity is not greater than the electric capacity needed by the electric unmanned aerial vehicle to land from the present position; determining whether the remaining capacity is greater than the electric capacity needed by the electric unmanned aerial vehicle to return from the present position to the preset position, if the remaining capacity is greater than the electric capacity needed by the electric unmanned aerial vehicle to land from the present position; and continuing a normal fly if the remaining capacity is greater than the electric capacity needed by the electric unmanned aerial vehicle to return from the present position to the preset position.

Advantages of the above-described intelligent methods of protecting an electric capacity for an electric unmanned aerial vehicle can at least include the following.
(1) With the above-described intelligent method of protecting an electric capacity for an electric unmanned aerial vehicle, a safety electric capacity needed by the electric unmanned aerial vehicle to perform a safety protection command at a present position can be calculated by obtaining a coordinate information of the present position of the electric unmanned aerial vehicle in real-time. If the remaining capacity of the battery is not greater than the safety electric capacity, a corresponding safety protection command can be performed immediately, such that the electric unmanned aerial vehicle can be protected in real-time, and prevented from accidents due to an insufficient electric capacity of the electric unmanned aerial vehicle.
(2) With the above-described intelligent method of protecting an electric capacity for an electric unmanned aerial vehicle, a determination can be automatically made on whether a safety protection command is to be performed based on a comparison of the safety electric capacity of the present position with the remaining capacity of the battery. The user is free of determining based on his/her experience, such that the electric unmanned aerial vehicle can be protected more effectively and intelligently with the above-described intelligent method of protecting an electric capacity.
(3) With the above-described intelligent method of protecting an electric capacity for an electric unmanned aerial vehicle, the safety electric capacity can be updated in real-time based on the coordinate information of the present position. The electric unmanned aerial vehicle does not perform an early return flight or an early landing, such that a utilization of the battery can be improved.
(4) Two different levels of alarm electric capacity are set in the intelligent method of protecting an electric capacity for an electric unmanned aerial vehicle: the electric capacity needed by the electric unmanned aerial vehicle to land from the present position can be set as the first-level alarm electric capacity, and the electric capacity needed by the electric unmanned aerial vehicle to return from the present position to the preset position can be set as the second-level alarm electric capacity. Different safety protection measures can be performed in accordance with different levels of warning electric capacity. For instance, if the remaining capacity of the battery drops to the first-level alarm electric capacity, the electric unmanned aerial vehicle can be automatically controlled to land from the present position, thereby an emergent protection measures is performed to the electric unmanned aerial vehicle; and if the remaining capacity of the battery drops to the second-level alarm electric capacity, the electric unmanned aerial vehicle can be controlled to perform an automatic return flight or to continue a normal flight, so as to further improve the utilization of the battery.
(5) Two different levels of alarm electric capacity are set in the intelligent method of protecting an electric capacity for an electric unmanned aerial vehicle. The electric capacity needed by the electric unmanned aerial vehicle to land from the present position can be set as the first-level alarm electric capacity. A determination can be made with first priority on whether the remaining capacity of the battery drops to the first-level alarm electric capacity, so as to improve a efficiency in controlling the electric capacity of the electric unmanned aerial vehicle.

In some embodiment, the method can further comprise: automatically performing a command of returning to the preset position or reminding a user whether to perform the command of returning to the preset position, if the remaining capacity is not greater than the electric capacity needed by the electric unmanned aerial vehicle to return from the present position to the preset position.

In some embodiments, the process of calculating the electric capacity needed by the electric unmanned aerial vehicle to land from the present position can comprises: obtaining a total capacity of the battery and a time of flight, and calculating an electric capacity consumption rate of the battery under current flight parameters; calculating a vertical height of the electric unmanned aerial vehicle from the present position to a take-off point based on a coordinate information of the take-off point and the coordinate information of the present position; calculating a time needed by the electric unmanned aerial vehicle to land from the present position based on the vertical height; calculating the electric capacity needed by the electric unmanned aerial vehicle to land from the present position based on (1) the electric capacity consumption rate of the battery under current flight parameters, (2) and the time needed by the electric unmanned aerial vehicle to land from the present position.

In some embodiments, the electric capacity needed by the electric unmanned aerial vehicle to land from the present position comprises a reserved electric capacity.

In some embodiments, a path for the electric unmanned aerial vehicle to return from the present position to the preset position can be one of an original flight path, a linear path in a horizontal direction and a linear path in a vertical direction between the present position and the preset position, or a linear path between the present position and the preset position.

In some embodiments, in the process of calculating the electric capacity needed by the electric unmanned aerial vehicle to return from the present position to the preset position, the electric unmanned aerial vehicle can automatically select a return path according to a preset criterion, and calculate an electric capacity needed by the electric unmanned aerial vehicle to return from the present position to the preset position based on the selected return path.

In some embodiments, the preset criterion can comprise at least one of a path having the least electric capacity consumption, a path having the shortest return trip, or a path having the least velocity changes.

In some embodiments, the preset criterion can be a path having the least electric capacity consumption, the process of calculating the electric capacity needed by the electric unmanned aerial vehicle to return from the present position to the preset position can comprises: calculating an electric capacity consumption of the electric unmanned aerial vehicle along various paths from the present position to the preset position; and calculating an return path electric capacity consumption of different paths, the return path electric capacity consumption comprising an electric capacity consumption corresponding to a path, and automatically selecting a path having the least return path electric capacity consumption as the return path.

In some embodiments, a path of the electric unmanned aerial vehicle to return from the present position to the preset position can be automatically set or set by a user.

In some embodiments, the process of calculating the electric capacity needed by the electric unmanned aerial vehicle to return from the present position to the preset position can comprises: obtaining a total capacity of the battery and a time of flight, and calculating an electric capacity consumption rate of the battery under current flight parameters; calculating a horizontal distance and a vertical height of the electric unmanned aerial vehicle to return from the present position to the preset position based on the coordinate information of the present position and the coordinate information of the preset position; calculating a time needed by the electric unmanned aerial vehicle to return from the present position to the preset position based on the horizontal distance and the vertical height; and calculating the electric capacity needed by the electric unmanned aerial vehicle to return from the present position to the preset position based on (1) the electric capacity consumption rate of the battery under current flight parameters, and (2) the time needed by the electric unmanned aerial vehicle to return from the present position to the preset position.

In some embodiments, the process of calculating the electric capacity needed by the electric unmanned aerial vehicle to return from the present position to the preset position can comprise calculating an electric capacity needed for the horizontal distance and calculating an electric capacity needed for the vertical height, the electric capacity needed for the horizontal distance can comprise a first reserved electric capacity, and the electric capacity needed for the vertical height can comprise a second reserved electric capacity.

In some embodiments, the preset position can be a waypoint in a flight path which is recorded by the electric unmanned aerial vehicle, and the process of calculating the electric capacity needed by the electric unmanned aerial vehicle to return from the present position to the preset position can comprise: obtaining a total capacity of the battery and a time of flight, and calculating an electric capacity consumption rate of the battery under current flight parameters; calculating a total distance for the electric unmanned aerial vehicle to return from the present position to the preset position along the original flight path based on the coordinate information of the present position and the coordinate information of the preset position; calculating a time needed by the electric unmanned aerial vehicle to return from the present position to the preset position along the original flight path based on the total distance of the electric unmanned aerial vehicle to return from the present position to the preset position along the original flight path; and calculating an electric capacity needed by the electric unmanned aerial vehicle to return from the present position to the preset position along the original flight path based on (1) the electric capacity consumption rate of the battery under current flight parameters, and (2) the time needed by the electric unmanned aerial vehicle to return from the present position to the preset position along the original flight path.

In some embodiments, the electric capacity needed by the electric unmanned aerial vehicle to return from the present position to the preset position along the original flight path can comprise a reserved electric capacity.

In some embodiments, a time needed by the electric unmanned aerial vehicle during landing can be calculated based on a total descending height and a descending velocity of the electric unmanned aerial vehicle. In the process of descending, the vertical velocity of the electric unmanned aerial vehicle can vary at a plurality of preset heights.

In some embodiments, the plurality of preset heights can comprise a first preset height and a second preset height. The electric unmanned aerial vehicle can descend to the first preset height at a uniform velocity, gradually decelerate and descend to the second preset height, and descend to the ground at a uniform velocity.

In some embodiments, the first preset height and the second preset height can be measured by a distance-measuring sensor carried by the electric unmanned aerial vehicle, or set by a user in advance according to a total descending height.

In some embodiments, the electric capacity consumption rate of the battery under the present flight parameters can be obtained by measuring the remaining capacity multiple times at a preset time interval Δt and averaging the plurality of measurements. An electric capacity consumption rate at the n^{th} preset time interval Δt is (Q1-Qn) /n × Δt, where Q1 is the total capacity of the battery, and Qn is a remaining capacity of the battery as measured after the n^{th} preset time interval Δ t.

In some embodiments, the preset position can be a take-off point of the electric unmanned aerial vehicle or a target point specified by a user.

In some embodiments, the remaining capacity of the battery can be calculated by subtracting a preset electric capacity from an actual remaining capacity of the battery, and the preset electric capacity can be used as a compensation for a computing error of the safety electric capacity.

In some embodiments, the remaining capacity of the battery can be obtained by sampling a voltage with an AD sampling circuit and/or by measuring a current with a current meter.

The present disclosure further provides an electric unmanned aerial vehicle in which the intelligent method of protecting an electric capacity for an electric unmanned aerial vehicle can be performed.

The electric unmanned aerial vehicle can comprise: a position sensor for obtaining a coordinate information of a present position of the electric unmanned aerial vehicle in real-time; a memory for storing a coordinate information of a preset position of the electric unmanned aerial vehicle; and a controller in communication with the position sensor and the memory, and being configured to calculate a safety electric capacity needed by the electric unmanned aerial vehicle to perform a safety protection command at the present position based on the coordinate information of the present position of the electric unmanned aerial vehicle and the coordinate information of the preset position, and compare the safety electric capacity with a remaining capacity of the battery. If the remaining capacity of the battery is not greater than the safety electric capacity, the controller can perform a corresponding safety protection command.

Advantages of the above-described electric unmanned aerial vehicle can at least include the following.
(1) The position sensor of the above-described electric unmanned aerial vehicle can measure the coordinate information of the present position of the electric unmanned aerial vehicle in real-time. The controller can obtain the coordinate information of the present position of the electric unmanned aerial vehicle in-real time, and calculate the safety electric capacity needed by the electric unmanned aerial vehicle to perform a safety protection command at the present position. If the remaining capacity of the battery is not greater than the safety electric capacity, the controller can immediately perform a corresponding safety protection command, such that the electric unmanned aerial vehicle can be protected in real-time, and an accident due to an insufficient electric capacity of the electric unmanned aerial vehicle can be prevented.
(2) The controller of the above-described electric unmanned aerial vehicle can automatically determine whether a safety protection command is needed based on to the safety electric capacity at the present position and the remaining capacity of the battery. The user is free of determining based on his/her experience, such that the above-described electric unmanned aerial vehicle can be automatically protected and provided with an intelligent protection function.
(3) The position sensor of the above-described electric unmanned aerial vehicle can measure the coordinate information of the present position of the electric unmanned aerial vehicle in real-time. The safety electric capacity can be updated in real-time based on a change in the coordinate information of the present position. The electric unmanned aerial vehicle does not perform an early return flight or an early landing, such that a utilization of the battery can be improved.
(4) The controller of the above-described electric unmanned aerial vehicle can implement two different levels of electric capacity alarm. If the remaining capacity of the battery can only support a return flight to the preset position, there is a possibility that the electric unmanned aerial vehicle cannot return successfully if a normal flight is continued. In this situation, the controller can automatically implement a return flight or continue the normal flight, according to the user's setting. If the remaining capacity of the battery can only support a landing to the ground, the controller can implement an automatic landing function.

In some embodiments, the position sensor can comprise at least one of a GPS sensor or a height sensor.

In some embodiments, the height sensor can comprise at least one of a barometric altimeter, a laser altimeter, a radio altimeter, an ultrasound wave altimeter, or an image distance-measuring sensor.

In some embodiments, the controller can comprise a computing unit for calculating a safety electric capacity needed for protecting safely the electric unmanned aerial vehicle based on the coordinate information of the present position of the electric unmanned aerial vehicle and the coordinate information of the preset position, and a comparator for determining a relation between the remaining capacity of the battery and the safety electric capacity. Optionally, the controller can comprises a microprocessor configured to calculate the safety electric capacity needed for protecting the electric unmanned aerial vehicle based on (1) the coordinate information of the present position of the electric unmanned aerial vehicle and (2) the coordinate information of the preset position, and determine a relation between the remaining capacity of the battery and the safety electric capacity.

In some embodiments, the controller can further comprises an electric capacity detecting circuit for detecting the remaining capacity of the battery in real-time, and the controller can obtain the remaining capacity of the battery with the electric capacity detecting circuit.

In some embodiments, the electric capacity detecting circuit can be an AD sampling circuit and/or a current meter.

In some embodiments, the battery can be a smart battery which automatically detects a remaining capacity thereof, and the controller can be in communication with the smart battery to obtain the remaining capacity.

In some embodiments, the safety electric capacity can comprise at least one of an electric capacity needed by the electric unmanned aerial vehicle to return from the present position to a preset position, an electric capacity needed by the electric unmanned aerial vehicle to land from the present position, or an electric capacity needed by the electric unmanned aerial vehicle to deploy a safety device. The safety protection command can comprise correspondingly at least one of a command of returning to the preset position, a command of landing from the present position, or a command of deploying the safety device

In some embodiments, the safety electric capacity can comprise an electric capacity needed by the electric unmanned aerial vehicle to return from the present position to the preset position.

In some embodiments, if the remaining capacity of the battery is not greater than the electric capacity needed by the electric unmanned aerial vehicle to return from the present position to a preset position, the controller can automatically perform a command of landing from the present position.

In some embodiments, the safety electric capacity can further comprise the electric capacity needed by the electric unmanned aerial vehicle to return from the present position to a preset position. If the remaining capacity of the battery is greater than the electric capacity needed by the electric unmanned aerial vehicle to return from the present position to a preset position and greater than the electric capacity needed by the electric unmanned aerial vehicle to land from the present position, the controller can control the electric unmanned aerial vehicle to continue a normal flight.

In some embodiments, if the remaining capacity of the battery is greater than the electric capacity needed by the electric unmanned aerial vehicle to land from the present position but not greater than the electric capacity needed by the electric unmanned aerial vehicle to return from the present position to a preset position, the controller can automatically perform a command of returning to the preset position.

In some embodiments, the electric unmanned aerial vehicle can further comprise a reminder module in communication with the controller. If the remaining capacity of the battery is greater than the electric capacity needed by the electric unmanned aerial vehicle to land from the present position but not greater than the electric capacity needed by the electric unmanned aerial vehicle to return from the present position to a preset position, the controller can control the reminder module to provide a prompting signal on whether to perform a return to the preset position.

In some embodiments, the electric unmanned aerial vehicle can further comprise a sensor for detecting an obstacle in a preset range around the electric unmanned aerial vehicle. If the sensor detects an obstacle in the preset range around the electric unmanned aerial vehicle, the controller can automatically plan a return path.

In some embodiments, the sensor can comprise at least one of an infrared distance-measuring sensor, an ultrasound wave distance-measuring sensor, an image distance-measuring sensor, a laser distance-measuring sensor, or a microwave radar distance-measuring sensor.

In some embodiments, a path for the electric unmanned aerial vehicle to return from the present position to the preset position can be one of the followings: an original flight path, a linear path in a horizontal direction and a linear path in a vertical direction between the present position and the preset position, a linear path between the present position and the preset position.

In some embodiments, the path for the electric unmanned aerial vehicle to return to the preset position from the present position can be automatically set by the controller or set by a user.

In some embodiments, in automatically setting a return path, the controller can calculate an return path electric capacity consumption of different paths, and automatically select a path having the least return path electric capacity consumption as the return path.

In some embodiments, the remaining capacity of the battery is calculated by subtracting a preset electric capacity from an actual remaining capacity of the battery, the preset electric capacity is used as a compensation for a computing error of the safety electric capacity.

### BRIEF DESCRIPTION OF THE DRAWINGS

**FIG. 1** is a flow chart of an intelligent method of protecting an electric capacity for an electric unmanned aerial vehicle, according to an embodiment of the present disclosure;
**FIG. 2** is a flow chart of calculating an electric capacity needed for a safe return, in the intelligent method of protecting an electric capacity for an electric unmanned aerial vehicle of **FIG. 1**;
**FIG. 3** is a flow chart of calculating an electric capacity needed for a safe landing, in the intelligent method of protecting an electric capacity for an electric unmanned aerial vehicle of **FIG. 1**;
**FIG. 4** is a flow chart of an intelligent method of protecting an electric capacity for an electric unmanned aerial vehicle, according to another embodiment of the present disclosure;
**FIG. 5** is a flow chart of calculating and judging processes in the intelligent method of protecting an electric capacity for an electric unmanned aerial vehicle, according to another embodiment of the present disclosure;
**FIG. 6** is a schematic view of an electric unmanned aerial vehicle, according to an embodiment of the present disclosure.

### DETAILED DESCRIPTION OF THE DISCLOSURE

The technical solution of the present disclosure will be described clearly and completely in the following detailed description with reference to the embodiments of the disclosure in combination with the drawings. It should be apparent that embodiments described herein are only some but not all embodiments of the present disclosure. Other embodiments obtained by those having ordinary skills in the art on the basis of the described embodiments of the present disclosure without any inventive efforts should fall within the protection scope of the present disclosure.

The present disclosure provides an intelligent method of protecting an electric capacity for an electric unmanned aerial vehicle. A remaining flight time of the electric unmanned aerial vehicle (i.e., a remaining capacity of a battery) can be calculated based on information such as a voltage and/or a current of the battery. Meanwhile, a time for performing a safety protection command (i.e., a safety electric capacity) by the electric unmanned aerial vehicle at present position can be calculated based on a present state of the electric unmanned aerial vehicle. Corresponding protection measures can be automatically performed in view of the remaining capacity of a battery and the safety electric capacity, to prevent flight accidents due to an insufficient electric capacity of the battery.

In some embodiments, the electric unmanned aerial vehicle can be a single-rotor unmanned aerial vehicle or a multi-rotor unmanned aerial vehicle (for example, a quad-rotor unmanned aerial vehicle or a six-rotor unmanned aerial vehicle). Alternatively, the electric unmanned aerial vehicle can be a fixed wing unmanned aerial vehicle.

In some embodiments, the safety electric capacity can be an electric capacity needed by an electric unmanned aerial vehicle to land directly from the present position. Alternatively, the safety electric capacity can be an electric capacity needed by the electric unmanned aerial vehicle to return to a destination (e.g., the HOME point) from the present position. Alternatively, the safety electric capacity can be an electric capacity needed by the electric unmanned aerial vehicle to open a safety device (for example, a parachute or a safety airbag). The safety electric capacity can be a combination of above described electric capacity. The safety electric capacity is not limited to above described electric capacity. For instance, the safety electric capacity can be an electric capacity needed by the electric unmanned aerial vehicle to descend from the present position to a safety height.

Different safety protection commands can be performed according to different definition of the safety electric capacity. For instance, if the safety electric capacity is defined as an electric capacity needed by the electric unmanned aerial vehicle to land directly from the present position, then the safety protection command can be a command of immediately landing from the present position. Optionally, if the safety electric capacity is defined as an electric capacity needed by the electric unmanned aerial vehicle to return to a preset position from the present position, then the safety protection command can be a command of immediately returning to the preset position from the present position. Optionally, if the safety electric capacity is defined as a time needed by the electric unmanned aerial vehicle to open a safety device, the safety protection command can be a command of immediately deploying the safety device.

The safety electric capacity can be a combination of above described electric capacity. For instance, the safety electric capacity can comprise an electric capacity needed by an electric unmanned aerial vehicle to land directly from a present position and an electric capacity needed by the electric unmanned aerial vehicle to return to a preset position from the present position. In this circumstance, the following judgement can be performed to determine a safety protection command: (a) if the remaining capacity of a battery is not greater than an electric capacity needed by the electric unmanned aerial vehicle to land directly from a present position, then a command of landing directly from the present position can be perform; (b) if the remaining capacity of the battery is greater than an electric capacity needed by the electric unmanned aerial vehicle to land directly from a present position and not greater than an electric capacity needed by the electric unmanned aerial vehicle to return to a preset position from the present position, then a command of returning to the preset position can be performed; and (c) if the remaining capacity of the battery is greater than an electric capacity needed by the electric unmanned aerial vehicle to return to a preset position from the present position, then the electric unmanned aerial vehicle can continue an ordinary flight.

In some embodiments, the preset position to which the electric unmanned aerial vehicle returns can be a take-off point. Alternatively, the preset position can be a position specified by a user. The preset position is not limited to above described position. For instance, if the electric unmanned aerial vehicle is provided with a sensor capable of exploring a geographical appearance of ground, the preset position to which the electric unmanned aerial vehicle returns can be an optimal landing point which is automatically determined by the electric unmanned aerial vehicle.

In some embodiments, the safety electric capacity of the electric unmanned aerial vehicle can be continuously obtained and judged, until a safety protection command is performed. Alternatively, the safety electric capacity of the electric unmanned aerial vehicle can be obtained and judged at a predetermined time interval (for example, every 5 seconds), until a safety protection command is performed.

In some embodiments, a safety protection command can be automatically performed by the electric unmanned aerial vehicle. Alternatively, a safety protection command can be prompted to the user by a prompting module, and the user can then control the electric unmanned aerial vehicle to perform the safety protection command.

In some embodiments, the remaining capacity of a battery can be an electric capacity value as measured. Alternatively, the remaining capacity value of a battery can be an electric capacity value obtained by subtracting a reserved electric capacity from the electric capacity value as measured.

In some embodiments, the remaining capacity of a battery can be measured by a voltage measurement method. Alternatively, the remaining capacity of a battery can be measured by a current measurement method. The method of measuring the remaining capacity of a battery is not limited to the above described methods. For instance, the remaining capacity of a battery can be measured by a combination of a voltage measurement method and a current measurement method.

In some embodiments, a path of the electric unmanned aerial vehicle to return from the present position to the preset position can be any one of an original flight path, a linear path in a horizontal direction and a linear path in a vertical direction between the present position and the preset position, or a linear path between the present position and the preset position.

The path of the electric unmanned aerial vehicle to return to the preset position from the present position can be automatically set. Alternatively, the path can be set by a user.

In some embodiments, an electric capacity needed by an electric unmanned aerial vehicle to land directly from a present position and an electric capacity needed by the electric unmanned aerial vehicle to return to a preset position from the present position can be calculated based on (1) an average electric capacity consumption rate of a battery, (2) a time needed for directly landing from the present position and (3) a time needed for returning to the preset position from the present position. The electric capacity can be obtained in various different ways. For instance, the electric capacity can be obtained based on to an average electric capacity consumed at a unit height under current flight parameters, an average electric capacity consumed at a unit horizontal distance under current flight parameters, a height difference and a horizontal difference from the present position to the preset return position, and a reserved electric capacity.

Embodiments of the present disclosure will be described in details with reference to the drawings.

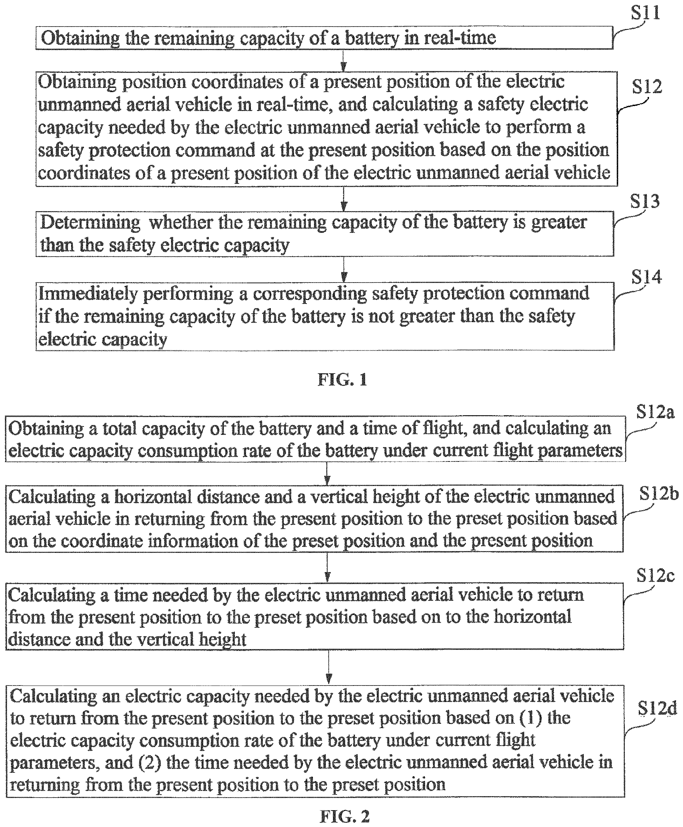

Referring to **FIG. 1****,** an intelligent method of protecting an electric capacity for an electric unmanned aerial vehicle according to an embodiment of the present disclosure can comprise the following processes.

In process **S11,** the remaining capacity of a battery can be obtained in real-time.

The remaining capacity of the battery can be measured in various manners. For instance, the remaining capacity of the battery can be obtained by sampling a voltage with an AD sampling circuit and/or by measuring a current with a current meter.

In some embodiments, the remaining capacity of the battery can be measured by a voltage sampling method. The electric capacity of a battery is a total electric charge that the battery can deliver. The electric capacity of a battery is measured in unit of AH. A voltage across an sampling device can be sampled by an AD sampling circuit. The sampling device can be electrically connected to a negative end of the battery. The present current can be calculated from I=U/R. A relationship between an electric capacity and a current is Q=I×T. A controller can sample this signal periodically, for example, every time interval t. A change in the electric capacity during a charging process or a discharging process is Q₁=ΣI×t. If an original electric capacity of the battery is Q₀, then the present electric capacity is Q=Q₁+Q₀. If a total battery capacity is Q_{ALL}, then the remaining percentage of electric capacity is P = Q_{ALL}/Q.

Alternatively, the remaining capacity of the battery can be measured by a current sampling method. A current through a sampling device can be directly sampled by a current meter. The remaining capacity of the battery can be calculated based on a relationship between the electric capacity and the current.

Alternatively, the remaining capacity of the battery can be measured by a combination of a voltage sampling method and a current sampling method. A voltage on the output terminal of the battery can be sampled by the AD sampling circuit, and a current across the sampling device can be sampled by a current meter. The remaining capacity of the battery can then be calculated based on Q=Pt=UIt.

In process **S12,** present position coordinates of the electric unmanned aerial vehicle can be obtained in real-time, and a safety electric capacity needed by the electric unmanned aerial vehicle to perform a safety protection command at the present position can be calculated based on the present position coordinates of the electric unmanned aerial vehicle and coordinates of a preset position.

The safety electric capacity can be variously defined. For instance, the safety electric capacity can be an electric capacity needed by the electric unmanned aerial vehicle to return to a preset position from the present position, an electric capacity needed by the electric unmanned aerial vehicle to land directly from the present position, or a combination of the electric capacity needed to return to the preset position from the present position and the electric capacity needed to land directly from the present position.

Different safety protection commands can be performed according to different definition of the safety electric capacity. For instance, if the safety electric capacity is defined as an electric capacity needed by the electric unmanned aerial vehicle to return to a preset position from the present position, then the safety protection command can be a command of returning to the preset position. Optionally, if the safety electric capacity is defined as an electric capacity needed by the electric unmanned aerial vehicle to land directly from the present position, then the safety protection command can be a command of landing directly from the present position.
The safety electric capacity can be calculated based on different definitions. For instance, as shown in **FIG. 2****,** if the safety electric capacity is defined as an electric capacity needed by the electric unmanned aerial vehicle to return to a preset position from the present position, the process of calculating the electric capacity needed by the electric unmanned aerial vehicle to return to the preset position from the present position can further comprise processes **S12a** - **S12d.**

In process **S12a,** a total capacity of the battery and a time of flight can be obtained, and an electric capacity consumption rate of the battery under current flight parameters can be calculated.

The total capacity of the battery, the time of flight and coordinate information of the take-off point can be stored in a memory on-board the electric unmanned aerial vehicle. A consumed electric capacity of the battery can be calculated based on the total capacity of the battery and the time of flight. The consumed electric capacity of the battery can correspond to the time of flight. For example, a consumed electric capacity can be calculated at a predetermined time interval.

In some embodiments, the electric capacity consumption rate of the battery can be calculated by averaging a plurality of measurements, such that the electric capacity consumption rate of the battery under the present flight parameters can be obtained with improved accuracy. For instance, the electric capacity consumption rate of the battery under the present flight parameters can be obtained by measuring the remaining capacity at a preset time interval Δt and then averaging the plurality of measurements. The electric capacity consumption rate at the n^{th} preset time interval Δt is (Q1-Qn)/n×Δt, where Q1 is the total capacity of the battery, and Qn is the remaining capacity of the battery as measured after the n^{th} preset time interval Δt. In other words, the electric capacity consumption rate at the 1^{th} preset time interval Δt is (Q1-Q2)/Δt, where Q1 is the total capacity of the battery, and Q2 is the remaining capacity of the battery as measured after the 1^{th} preset time interval Δt. The electric capacity consumption rate at the 2^{nd} preset time interval 2Δt is (Ql-Q3)/2Δt. The electric capacity consumption rates at the 3^{rd} preset time interval 3Δt and so on can be calculated in a similar manner. The preset time interval Δt can be set in view of different situations. In some instances, the preset time interval Δt can be 5 seconds.

In process **S12b,** a horizontal distance and a vertical height of the electric unmanned aerial vehicle in returning from the present position to the preset position can be calculated based on the coordinate information of the preset position and the coordinate information of the present position.

The coordinate information of the present position and the preset position can be obtained by a GPS sensor, a height sensor and so on. The horizontal distance and vertical height from the present position to the preset position can be calculated based on the coordinate information if the coordinate information of the present position and the preset position is obtained.

In some embodiments, the coordinate information of the preset position can be stored in a memory on-board the electric unmanned aerial vehicle in advance. Alternatively, the coordinate information of the preset position can be inputted by a user. The plane coordinates of the present position on a horizontal plane can be obtained from the GPS sensor. The horizontal distance of the electric unmanned aerial vehicle in returning from the present position to the preset position can be calculated based on the plane coordinates of the present position on the horizontal plane and the plane coordinates of the preset position. The height coordinates of the present position in a vertical direction can be obtained from a distance-measuring sensor, such as a laser distance-measuring sensor and so on. The vertical height of the electric unmanned aerial vehicle in returning from the present position to the preset position can be calculated based on the height coordinates of the preset position and the present position in the vertical direction.

Alternatively, the coordinate information of the preset position can be stored in a memory on-board the electric unmanned aerial vehicle in advance. Alternatively, the coordinate information of the preset position can be inputted by a user. The plane coordinates of the present position on a horizontal plane can be obtained from the GPS sensor. The horizontal distance of the electric unmanned aerial vehicle in returning from the present position to the preset position can be calculated based on the plane coordinates of the present position on the horizontal plane and the plane coordinates of the preset position. The height coordinates of the present position in the vertical direction can be obtained from a height sensor, such as a barometric altimeter, a radio altimeter and so on. The vertical height from the present position to the preset position can be calculated based on the height coordinates of the present position and the preset position in the vertical direction. In case the preset position is not the take-off point (for example, the preset position can be a position reset by the user), the vertical height from the present position to the take-off point can be used as the vertical height from the present position to the position reset by the user.

In process **S12c,** a time needed by the electric unmanned aerial vehicle to return from the present position to the preset position can be calculated based on to the horizontal distance and the vertical height.

The time needed by the electric unmanned aerial vehicle to fly over the horizontal distance can be calculated based on the horizontal distance and a horizontal velocity of the electric unmanned aerial vehicle. For instance, the flight time for the horizontal distance = the horizontal distance/the horizontal velocity. The electric unmanned aerial vehicle can fly at a uniform velocity in the horizontal direction. For instance, the electric unmanned aerial vehicle can fly horizontally at a velocity of 8m/s.

The time needed for the electric unmanned aerial vehicle to descend the vertical height can be calculated based on the vertical height and a vertical velocity of the electric unmanned aerial vehicle. For instance, the flight time for the vertical height = the vertical height/ the vertical velocity. In the process of descending, the vertical velocity of the electric unmanned aerial vehicle can vary at a plurality of preset heights. In some embodiments, the plurality of preset heights can comprise a first preset height and a second preset height. The electric unmanned aerial vehicle can descend to the first preset height at an uniform velocity, gradually decelerate and descend to the second preset height, and then descend to the ground at an uniform velocity. For instance, the electric unmanned aerial vehicle can descend to a height of 15m at a velocity of 2m/s first, and descend to the height of 5m while gradually decelerating to 0.5m/s, and then descend to the ground at an uniform velocity of 0.5m/s.

It should be appreciated that, the first preset height and the second preset height can be measured from a distance-measuring sensor (such as a radio distance-measuring sensor, a laser distance-measuring sensor and so on) on-board the electric unmanned aerial vehicle. Optionally, the first preset height and the second preset height can be set by the user in advance, in view of a total descending height.

In process S12d, an electric capacity needed by the electric unmanned aerial vehicle to return from the present position to the preset position can be calculated based on (1) the electric capacity consumption rate of the battery under current flight parameters, and (2) the time needed by the electric unmanned aerial vehicle in returning from the present position to the preset position.

The electric capacity needed by the electric unmanned aerial vehicle to return from the present position to the preset position can be obtained by multiplying the electric capacity consumption rate of the battery under current flight parameters the time needed by the electric unmanned aerial vehicle in returning from the present position to the preset position. For instance, the electric capacity needed for return flight = the electric capacity consumption rate × (the flight time over the vertical height + the flight time over the horizontal distance).

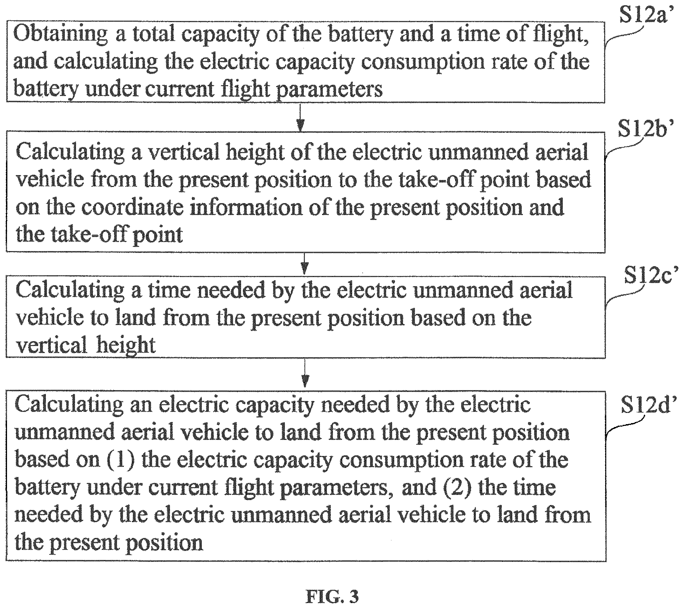

Referring to **FIG. 3****,** if the safety electric capacity is defined as an electric capacity needed by the electric unmanned aerial vehicle to land directly from the present position, the process of calculating the electric capacity needed by the electric unmanned aerial vehicle to land directly from the present position can further comprise processes **S12a'** - **S12d'.**

In process **S12a',** a total capacity of the battery, a time of flight and a coordinate information of a take-off point can be obtained, and the electric capacity consumption rate of the battery under current flight parameters can be calculated.

The total capacity of the battery, the time of flight and the coordinate information of the take-off point can be stored in the memory on-board the electric unmanned aerial vehicle. A consumed electric capacity of the battery can be calculated based on the total capacity of the battery and the time of flight. The consumed electric capacity of the battery can correspond to the time of flight. For example, a consumed electric capacity can be calculated at a predetermined time interval.

In some embodiments, the electric capacity consumption rate of the battery can be calculated by averaging a plurality of measurements, such that the electric capacity consumption rate of the battery under the present flight parameters can be obtained with improved accuracy. For instance, the electric capacity consumption rate of the battery under the present flight parameters can be obtained by measuring the remaining capacity at a preset time interval Δt and then averaging the plurality of measurements. The electric capacity consumption rate at the n^{th} preset time interval Δt is (Q1-Qn)/n×Δt, where Q1 is the total capacity of the battery, and Qn is the remaining capacity of the battery as measured after the n^{th} preset time interval Δt. In other words, the electric capacity consumption rate at the 1^{th} preset time interval Δt is (Q1-Q2)/Δt, where Q1 is the total capacity of the battery, and Q2 is the remaining capacity of the battery as measured after the 1^{th} preset time interval Δt. The electric capacity consumption rate at the 2^{nd} preset time interval 2Δt is (Q1-Q3)/2Δt. The electric capacity consumption rates at the 3^{rd} preset time interval 3Δt and so on can be calculated in a similar manner. The preset time interval Δt can be set in view of different situations. In some instances, the preset time interval Δt can be 5 seconds.

Step **S12b',** a vertical height of the electric unmanned aerial vehicle from the present position to the take-off point can be calculated based on the coordinate information of the present position and the coordinate information of the take-off point.

In some embodiments, the vertical height from the present position to the take-off point can be obtained from a height sensor (for example, a barometric altimeter and so on). The vertical height from the present position to the take-off point can be used as the vertical height from the present position to the ground.

Step **S12c',** a time needed by the electric unmanned aerial vehicle to land from the present position can be calculated based on the vertical height.

The time needed for the electric unmanned aerial vehicle to descend the vertical height can be calculated based on the vertical height and a vertical velocity of the electric unmanned aerial vehicle. For instance, the flight time for the vertical height = the vertical height/ the vertical velocity. In the process of descending, the vertical velocity of the electric unmanned aerial vehicle can vary at a plurality of preset heights. In some embodiments, the plurality of preset heights can comprise a first preset height and a second preset height. The electric unmanned aerial vehicle can descend to the first preset height at a uniform velocity, gradually decelerate and descend to the second preset height, and then descend to the ground at an uniform velocity. For instance, the electric unmanned aerial vehicle can descend to a height of 15m at a velocity of 2m/s first, and descend to the height of 5m while gradually decelerating to 0.5m/s, and then descend to the ground at a uniform velocity of 0.5m/s.

It should be appreciated that, the first preset height and the second preset height can be measured from a distance-measuring sensor (such as a laser distance-measuring sensor and so on) on-board the electric unmanned aerial vehicle. Optionally, the first preset height and the second preset height can be set by the user in advance, in view of a total descending height.

Step **S12d',** an electric capacity needed by the electric unmanned aerial vehicle to land from the present position can be calculated based on (1) the electric capacity consumption rate of the battery under current flight parameters, and (2) the time needed by the electric unmanned aerial vehicle to land from the present position.

The electric capacity needed by the electric unmanned aerial vehicle to land from the present position can be obtained by multiplying the electric capacity consumption rate of the battery under current flight parameters and the time needed by the electric unmanned aerial vehicle to land from the present position. For instance, the electric capacity needed for landing = the electric capacity consumption rate × the flight time over the vertical height.

It should be appreciated that, the electric capacity needed by the electric unmanned aerial vehicle to return from the present position to the preset position and the electric capacity needed by the electric unmanned aerial vehicle to land from the present position can be calculated various ways in addition to the above described methods. For instance, the electric capacity needed by the electric unmanned aerial vehicle to land from the present position can be calculated by (1) measuring an actual height from the present position to the ground with a distance-measuring sensor, and (2) calculating the electric capacity needed to land from the present position based on the actual height. For another instance, if the preset position is a waypoint in the flight path which is recorded by the electric unmanned aerial vehicle, then in calculating the electric capacity needed by the electric unmanned aerial vehicle to return from the present position to the preset position, the total distance of the actual return flight can be calculated assuming that the electric unmanned aerial vehicle returns along the original flight path.

In some embodiments, if the preset position is a waypoint in the flight path which is recorded by the electric unmanned aerial vehicle, the process of calculating the electric capacity needed by the electric unmanned aerial vehicle to return safely from the present position to the preset position can further comprise: obtaining a total capacity of the battery and a time of flight, calculating an electric capacity consumption rate of the battery under current flight parameters; calculating a total distance for the electric unmanned aerial vehicle to return from the present position to the preset position along the original flight path, based on the coordinate information of the present position and the preset position and a trip information of the original flight path; calculating a time needed by the electric unmanned aerial vehicle to return from the present position to the preset position along the original flight path, based on the total distance for the electric unmanned aerial vehicle to return from the present position to the preset position along the original flight path; and calculating the electric capacity needed by the electric unmanned aerial vehicle to return from the present position to the preset position along the original flight path, based on the electric capacity consumption rate of the battery under current flight parameters and the time needed by the electric unmanned aerial vehicle to return from the present position to the preset position along the original flight path.

In some embodiments, if the return path is a linear path between the present position and the preset position, the process of calculating the electric capacity needed by the electric unmanned aerial vehicle to return from the present position to the preset position can further comprise: obtaining a total capacity of the battery and a time of flight, and calculating an electric capacity consumption rate of the battery under current flight parameters; calculating a linear distance from the present position of the electric unmanned aerial vehicle to the preset position, based on the coordinate information of the present position and the preset position; calculating a time needed by the electric unmanned aerial vehicle to return from the present position to the preset position along a linear path, based on the linear distance from the present position of the electric unmanned aerial vehicle to the preset position; and calculating the electric capacity needed by the electric unmanned aerial vehicle to return to the preset position from the present position along the linear path, based on the electric capacity consumption rate of the battery under current flight parameters and the time needed by the electric unmanned aerial vehicle to return from the present position to the preset position along the linear path.

In the process of the electric unmanned aerial vehicle returning to a preset position from a present position, the electric unmanned aerial vehicle can automatically select a return path according to a preset criterion, and calculate an electric capacity needed by the electric unmanned aerial vehicle to return from the present position to the preset position along the selected return path. The return path of the electric unmanned aerial vehicle from the present position to the preset position can be any one of an original flight path, a linear path in a horizontal direction and a linear path in a vertical direction from the present position to the preset position, a linear path between the present position and the preset position, and so on. The preset criterion can be a path having the least electric capacity consumption, a path having the shortest return trip, a path having the least velocity changes, and so on. The number of the preset criterion can be one, two or more.

In some embodiments, if the preset criterion is a path having the least electric capacity consumption, the process of calculating the electric capacity needed by the electric unmanned aerial vehicle to return from the present position to the preset position can comprise: calculating an electric capacity consumption of the electric unmanned aerial vehicle along various paths from the present position to the preset position; and calculating return path electric capacity consumption of different paths, the return path electric capacity consumption comprising an electric capacity consumption corresponding to a path, and automatically selecting a path having the least return path electric capacity consumption as the return path.

In order to compensate an error in calculating, the electric capacity needed by the electric unmanned aerial vehicle to return the present position to the preset position from can further comprise a reserved electric capacity, in addition to the return path electric capacity consumption corresponding to the return path.

The errors in calculating the electric capacity needed by the electric unmanned aerial vehicle to return from the present position to the preset position and the electric capacity needed by the electric unmanned aerial vehicle to land from the present position can be compensated by introducing the reserved electric capacity. In other words, a predetermined electric capacity can be reserved for the electric capacity needed by the electric unmanned aerial vehicle to return from the present position to the preset position. For instance, an electric capacity needed for return flight = a calculated electric capacity + a reserved electric capacity. A predetermined electric capacity can be reserved for the electric capacity needed by the electric unmanned aerial vehicle to land from the present position. For instance, an electric capacity needed for landing = a calculated electric capacity + a reserved electric capacity.

In some embodiments, in calculating an electric capacity needed by an electric unmanned aerial vehicle to return from a present position to a preset position, the electric capacity needed by the electric unmanned to return from the present position to the preset position can comprise calculating an electric capacity needed for a horizontal distance and calculating an electric capacity needed for a vertical height. The electric capacity needed for the horizontal distance can comprise a first reserved electric capacity. The electric capacity needed for the vertical height can comprise a second reserved electric capacity. For instance, the electric capacity needed for the horizontal distance can reserve an electric capacity of 2% (e.g., the first reserved electric capacity can be an electric capacity of 2%) The electric capacity needed for the vertical height can reserve an electric capacity of 2% (e.g., the second reserved electric capacity can be an electric capacity of 2%).

In some embodiments, in calculating an electric capacity needed by the electric unmanned aerial vehicle to land from the present position, the electric capacity needed by the electric unmanned aerial vehicle to land from the present position can comprise a reserved electric capacity. For instance, the reserved electric capacity can be an electric capacity of 2%.

In some embodiments, in calculating an electric capacity needed by the electric unmanned aerial vehicle to return from the present position to the preset position along the original flight path, the electric capacity needed by the electric unmanned aerial vehicle to return from the present position to the preset position along the original flight path can comprise a reserved electric capacity. For instance, the reserved electric capacity can be an electric capacity of 2%.

In some instances, the remaining capacity of the battery can be calculated by subtracting a preset electric capacity from an actual remaining capacity of a battery. The preset electric capacity can be used as a compensation for a computing error of the safety electric capacity. For instance, a remaining capacity of the battery = an actual remaining capacity - a preset electric capacity. For example, the actual remaining capacity of a battery can reserve an electric capacity of 10%.

In process **S13,** whether the remaining capacity of the battery is greater than the safety electric capacity can be determined.

In some embodiments, if the safety electric capacity is defined as an electric capacity needed by the electric unmanned aerial vehicle to return from a present position to a preset position, a comparison of the electric capacity needed by the electric unmanned aerial vehicle to return from the present position to the preset position with the remaining capacity of the battery can be performed.

Alternatively, if the safety electric capacity is defined as an electric capacity needed by an electric unmanned aerial vehicle to land from a present position, a comparison of the electric capacity needed by the electric unmanned aerial vehicle to land from the present position with the remaining capacity of the battery can be performed.

Alternatively, if the safety electric capacity is defined as comprising an electric capacity needed by an electric unmanned aerial vehicle to return from a present position to a preset position and an electric capacity needed by the electric unmanned aerial vehicle to land from the present position, a comparison of a remaining capacity of the battery with the electric capacity needed by the electric unmanned aerial vehicle to return from the present position to the preset position and a comparison of a remaining capacity of the battery with the electric capacity needed by the electric unmanned aerial vehicle to land from the current can be respectively performed.

In process **S14,** a corresponding safety protection command can be immediately performed if the remaining capacity of the battery is not greater than the safety electric capacity.

In some embodiments, if the remaining capacity of the battery is not greater than the electric capacity needed for returning from the present position to the preset position, a command of returning to the preset position can be performed immediately.

Alternatively, if the remaining capacity of the battery is not greater than the electric capacity needed for the electric unmanned aerial vehicle to land from the present position, a command of landing from the current can be performed immediately.

Advantages of the above-described intelligent methods of protecting an electric capacity for an electric unmanned aerial vehicle can at least include:
(1) with the above-described intelligent method of protecting an electric capacity for an electric unmanned aerial vehicle, a safety electric capacity needed by the electric unmanned aerial vehicle to perform a safety protection command at a present position can be calculated by obtaining a coordinate information of the present position of the electric unmanned aerial vehicle in real-time; if the remaining capacity of the battery is not greater than the safety electric capacity, a corresponding safety protection command can be immediately performed, such that the electric unmanned aerial vehicle can be protected in real-time, and prevented from accidents due to an insufficient electric capacity of the electric unmanned aerial vehicle;
(2) with the above-described intelligent method of protecting an electric capacity for an electric unmanned aerial vehicle, a determination can be automatically made on whether a safety protection command is to be performed based on a comparison of the safety electric capacity of the present position with the remaining capacity of the battery; the user is free of determining based on his/her experience, such that the electric unmanned aerial vehicle can be protected more effectively and intelligently with the above-described intelligent method of protecting an electric capacity; and
(3) with the above-described intelligent method of protecting an electric capacity for an electric unmanned aerial vehicle, the safety electric capacity can be updated in real-time based on the coordinate information of the present position; the electric unmanned aerial vehicle does not perform an early return flight or an early landing, such that a utilization of the battery can be improved.

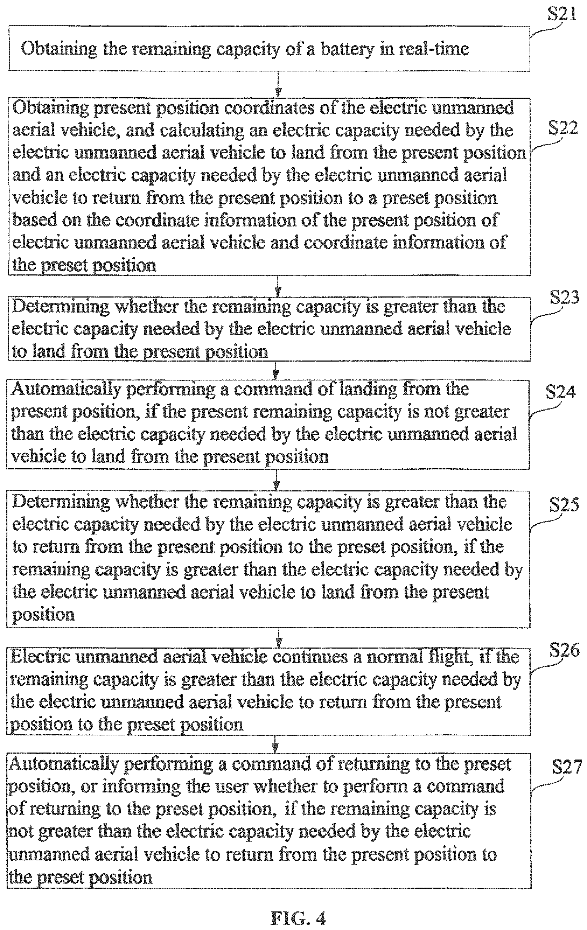

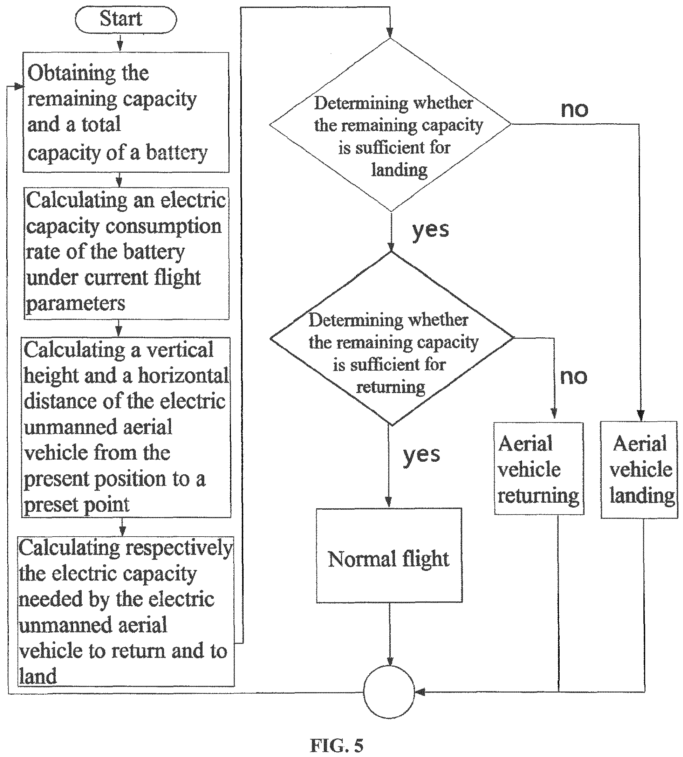

Referring to **FIG. 4** and **FIG. 5****,** an intelligent method of protecting an electric capacity for an electric unmanned aerial vehicle according to another embodiment of the present disclosure can comprise the following processes.

In process **S21,** the remaining capacity of a battery can be obtained in real-time.

The remaining capacity of the battery can be measured in various manners. For instance, the remaining capacity of the battery can be obtained by sampling a voltage with an AD sampling circuit and/or by measuring a current with a current meter.

In some embodiments, the remaining capacity of the battery can be measured by a voltage sampling method. The electric capacity of a battery is a total electric charge that the battery can deliver. The electric capacity of a battery is measured in unit of AH. A voltage across an sampling device can be sampled by an AD sampling circuit. The sampling device can be electrically connected to a negative end of the battery. The present current can be calculated from I=U/R. A relationship between an electric capacity and a current is Q=I×T. A controller can sample this signal periodically, for example, every time interval t. A change in the electric capacity during a charging process or a discharging process is Q₁=ΣI×t. If an original electric capacity of the battery is Q₀, then the present electric capacity is Q=Q₁+Q₀. If a total battery capacity is Q_{ALL}, then the remaining percentage of electric capacity is P = Q_{ALL}/Q.

Alternatively, the remaining capacity of the battery can be measured by a current sampling method. A current through a sampling device can be directly sampled by a current meter. The remaining capacity of the battery can be calculated based on a relationship between the electric capacity and the current.

Alternatively, the remaining capacity of the battery can be measured by a combination of a voltage sampling method and a current sampling method. A voltage on the output terminal of the battery can be sampled by the AD sampling circuit, and a current across the sampling device can be sampled by a current meter. The remaining capacity of the battery can then be calculated based on Q=Pt=UIt.

In process **S22,** present position coordinates of the electric unmanned aerial vehicle can be obtained in real-time, and an electric capacity needed by the electric unmanned aerial vehicle to land from the present position and an electric capacity needed by the electric unmanned aerial vehicle to return from the present position to a preset position can be calculated based on the present position coordinates of the electric unmanned aerial vehicle and a coordinate information of the preset position.

Method of calculating the electric capacity needed by the electric unmanned aerial vehicle to return to the preset position from the present position and method calculating the electric capacity needed by the electric unmanned aerial vehicle to land from the present position can be identical to the intelligent method of protecting an electric capacity for an electric unmanned aerial vehicle discussed hereinabove, and a detailed description is omitted here.

It will be appreciated that, the preset position can be a take-off point of the electric unmanned aerial vehicle or a target point specified by the user.

In process **S23,** a determination is made on whether the remaining capacity is greater than the electric capacity needed by the electric unmanned aerial vehicle to land from the present position.

In some instances, the electric capacity needed by the electric unmanned aerial vehicle to land from the present position can be set as a first-level alarm electric capacity of the safety electric capacity of the electric unmanned aerial vehicle. A determination can be firstly made on whether the remaining capacity is greater than the electric capacity needed by the electric unmanned aerial vehicle to land from the present position. This can help to protect the electric unmanned aerial vehicle effectively in a time of emergency.

In process **S24,** a command of landing from the present position can be automatically performed if the remaining capacity is not greater than the electric capacity needed by the electric unmanned aerial vehicle to land from the present position.

Since the electric capacity needed by the electric unmanned aerial vehicle to land from the present position is set as the first-level alarm electric capacity for the safety electric capacity of the electric unmanned aerial vehicle, when the remaining capacity of the battery is lower than or equal to the first-level alarm electric capacity, the electric unmanned aerial vehicle can be set to "automatically" perform the safety protection command, thereby the electric unmanned aerial vehicle can be protected more effectively.

In process **S25,** if the remaining capacity is greater than the electric capacity needed by the electric unmanned aerial vehicle to land from the present position, then a determination is made on whether the remaining capacity is greater than the electric capacity needed by the electric unmanned aerial vehicle to return from the present position to the preset position.

In some instances, the electric capacity needed by the electric unmanned aerial vehicle to return from the present position to the preset position can be set as a second-level alarm electric capacity for the safety electric capacity of the electric unmanned aerial vehicle. In case the remaining capacity does not drop to the first-level alarm electric capacity, a determination can be made on whether the remaining capacity is greater than the electric capacity needed by the electric unmanned aerial vehicle to return from the present position to the preset position. This can help to further improve the utilization of the battery.

In process **S26,** if the remaining capacity is greater than the electric capacity needed by the electric unmanned aerial vehicle to return from the present position to the preset position, the electric unmanned aerial vehicle can continue a normal flight.

Since the electric capacity needed by the electric unmanned aerial vehicle to return from the present position to the preset position is set as the second-level alarm electric capacity for the safety electric capacity of the electric unmanned aerial vehicle, when the remaining capacity of the battery is greater than the second level warning electric capacity, the electric unmanned aerial vehicle can continue a normal flight.

In some embodiments, the method can further comprise a process **S27**: if the remaining capacity is not greater than the electric capacity needed by the electric unmanned aerial vehicle to return from the present position to the preset position, a command of returning to the preset position can be automatically performed, or the user can be informed on whether to perform a command of returning to the preset position.

Since the electric capacity needed by the electric unmanned aerial vehicle to return from the present position to the preset position is set as the second-level alarm electric capacity for the safety electric capacity of the electric unmanned aerial vehicle, the second-level alarm electric capacity can be ignored if the remaining capacity does not drop to the first-level alarm electric capacity, and the electric unmanned aerial vehicle can continue a normal flight. This can help to further improve the utilization of the battery. For instance, if the remaining capacity is not greater than the electric capacity needed by the electric unmanned aerial vehicle to return from the present position to the preset position, the user can be prompted whether to perform the command of returning to the preset position, such that the user can make a decision in view of actual situation.

Advantages of the above-described intelligent methods of protecting an electric capacity for an electric unmanned aerial vehicle can at least include:
(1) with the above-described intelligent method of protecting an electric capacity for an electric unmanned aerial vehicle, a safety electric capacity needed by the electric unmanned aerial vehicle to perform a safety protection command at a present position can be calculated by obtaining a coordinate information of the present position of the electric unmanned aerial vehicle in real-time; if the remaining capacity of the battery is not greater than the safety electric capacity, a corresponding safety protection command can be performed immediately, such that the electric unmanned aerial vehicle can be protected in real-time, and prevented from accidents due to an insufficient electric capacity of the electric unmanned aerial vehicle;
(2) with the above-described intelligent method of protecting an electric capacity for an electric unmanned aerial vehicle, a determination can be automatically made on whether a safety protection command is to be performed based on a comparison of the safety electric capacity of the present position with the remaining capacity of the battery; the user is free of determining based on his/her experience, such that the electric unmanned aerial vehicle can be protected more effectively and intelligently with the above-described intelligent method of protecting an electric capacity;
(3) with the above-described intelligent method of protecting an electric capacity for an electric unmanned aerial vehicle, the safety electric capacity can be updated in real-time based on the coordinate information of the present position; the electric unmanned aerial vehicle does not perform an early return flight or an early landing, such that a utilization of the battery can be improved; and
(4) two different levels of alarm electric capacity are set in the intelligent method of protecting an electric capacity for an electric unmanned aerial vehicle: the electric capacity needed by the electric unmanned aerial vehicle to land from the present position can be set as the first-level alarm electric capacity, and the electric capacity needed by the electric unmanned aerial vehicle to return from the present position to the preset position can be set as the second-level alarm electric capacity; different safety protection measures can be performed in accordance with different levels of warning electric capacity; for instance, if the remaining capacity of the battery drops to the first-level alarm electric capacity, the electric unmanned aerial vehicle can be automatically controlled to land from the present position, thereby an emergent protection measures is performed to the electric unmanned aerial vehicle; and if the remaining capacity of the battery drops to the second-level alarm electric capacity, the electric unmanned aerial vehicle can be controlled to perform an automatic return flight or to continue a normal flight, so as to further improve the utilization of the battery; and
(5) two different levels of alarm electric capacity are set in the intelligent method of protecting an electric capacity for an electric unmanned aerial vehicle; the electric capacity needed by the electric unmanned aerial vehicle to land from the present position can be set as the first-level alarm electric capacity, and a determination can be made with first priority on whether the remaining capacity of the battery drops to the first-level alarm electric capacity, so as to improve a efficiency in controlling the electric capacity of the electric unmanned aerial vehicle.

On basis of the above-described intelligent method of protecting an electric capacity, the present disclosure further provides an electric unmanned aerial vehicle in which the above-described intelligent method of protecting an electric capacity can be performed. A configuration of the electric unmanned aerial vehicle according to an embodiment of the present disclosure will be described with reference to the drawings.

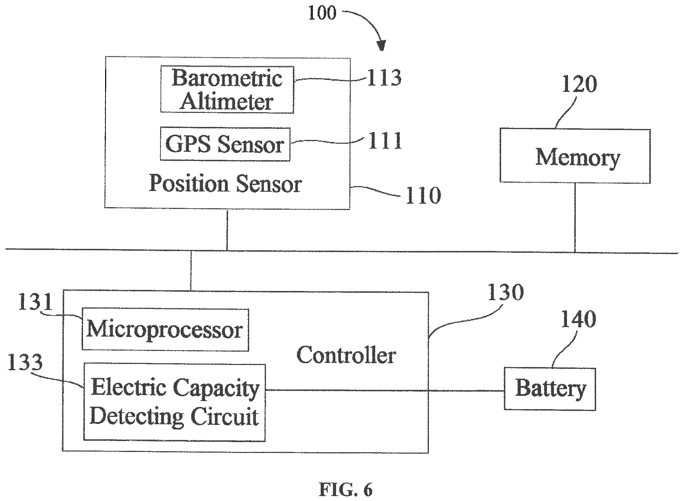

Referring to **FIG. 6**, an electric unmanned aerial vehicle **100** according to an embodiment of the present disclosure can comprise a position sensor **110,** a memory **120** and a controller **130.**

The position sensor **110** can obtain in real-time a coordinate information of a present position of the electric unmanned aerial vehicle **100.** The position sensor **110** can comprise at least one of a GPS sensor or a height sensor. The height sensor can comprise at least one of a barometric altimeter, a laser altimeter, a radio altimeter, an ultrasonic wave altimeter or an image distance-measuring sensor.

In some embodiments, the position sensor **110** can comprise a GPS sensor **111** and a barometric altimeter **113.** A horizontal coordinate information of the present position can be obtained from the GPS sensor **111,** and a height coordinate information of the present position can be obtained from the barometric altimeter **113.** Alternatively, the position sensor **110** can comprise a GPS sensor which can sense both a horizontal coordinate information and a height coordinate information of the present position.

The memory **120** can be configured to store a coordinate information of a preset position of the electric unmanned aerial vehicle **100.** For example, the memory **120** can be a SD memory card, a storage hard disc and so on.

In some instances, if the preset position is not the take-off point, then the memory can store a coordinate information of the take-off point of the electric unmanned aerial vehicle **100.**

The controller **130** can be in communication with the position sensor **110** and the memory. The controller **130** can calculate a safety electric capacity needed by the electric unmanned aerial vehicle **100** to perform a safety protection command at a present position, based on the coordinate information of the present position and the coordinate information of the preset position of the electric unmanned aerial vehicle **100,** and compare the safety electric capacity with a remaining capacity of a battery **140.**

In some embodiments, if the remaining capacity of the battery **140** is not greater than the safety electric capacity, then the controller **130** can perform a corresponding safety protection command.

The safety electric capacity can comprise at least one of an electric capacity needed by the electric unmanned aerial vehicle **100** to return from the present position to the preset position, an electric capacity needed by the electric unmanned aerial vehicle **100** to land from the present position, or an electric capacity needed by the electric unmanned aerial vehicle 100 to deploy a safety device. The safety protection command can accordingly comprise at least one of a command of immediately returning to the preset position, a command of immediately landing from the present position, or a command of immediately deploying a safety device.

For instance, in the described embodiments, the safety electric capacity can comprise the electric capacity needed by the electric unmanned aerial vehicle **100** to return from the present position to the preset position. If the remaining capacity of the battery **140** is not greater than the electric capacity needed by the electric unmanned aerial vehicle **100** to return from the present position to the preset position, the controller **130** can automatically perform the command of landing from the present position.

In some instances, the remaining capacity of the battery **140** can be an electric capacity obtained by subtracting a preset electric capacity from an actual remaining capacity of the battery **140,** where the preset electric capacity can be used as a compensation for a computing error of the safety electric capacity.

In some embodiments, the safety electric capacity can also comprise an electric capacity needed by an electric unmanned aerial vehicle **100** to return from a present position to a preset position. If the remaining capacity of the battery **140** is greater than (1) the electric capacity needed by the electric unmanned aerial vehicle **100** to return from the present position to the preset position, and (2) the electric capacity needed by the electric unmanned aerial vehicle **100** to land from the present position, then the controller **130** can control the electric unmanned aerial vehicle **100** to continue a normal flight.

If the remaining capacity of the battery **140** is greater than the electric capacity needed by the electric unmanned aerial vehicle **100** to land from the present position, but is not greater than the electric capacity needed by the electric unmanned aerial vehicle to return from the present position to the preset position, the controller **130** can selectively perform a corresponding safety protection command, or automatically perform a corresponding safety protection command.

For instance, in the described embodiments, if the remaining capacity of the battery **140** is greater than the electric capacity needed by the electric unmanned aerial vehicle **100** to land from the present position, but is not greater than the electric capacity needed by the electric unmanned aerial vehicle **100** to return from the present position to the preset position, the controller **130** can automatically perform a command of returning to the preset position.

Alternatively, the electric unmanned aerial vehicle **100** can further comprise a reminder module which is in communication with the controller **130.** If the remaining capacity of the battery **140** is greater than the electric capacity needed by the electric unmanned aerial vehicle **100** to land from the present position, but is not greater than the electric capacity needed by the electric unmanned aerial vehicle **100** to return from the present position to the preset position, the controller **130** can control the reminder module to provide a signal which prompts the user if the electric unmanned aerial vehicle is to return to the preset position.

The user can select to perform the command of returning to the preset position, or cancel the command of returning to the preset position and instruct the electric unmanned aerial vehicle to continue a normal flight.

The reminder module can be designed to satisfy various requirements. For example, the reminder module can be a display on a remote controller, and the prompt information can be displayed on the display screen. For another example, the reminder module can be a alerting lamp such as red LED, and a prompting function can be achieved by a flashing of the alerting lamp.

In some embodiments, the electric unmanned aerial vehicle **100** can comprise a sensor (not shown) for detecting an obstacle in a preset range around the electric unmanned aerial vehicle **100.** If the sensor detects an obstacle in the preset range around the electric unmanned aerial vehicle **100,** the controller can automatically plan a return path. For example, the sensor can be an infrared distance-measuring sensor, an ultrasound wave distance-measuring sensor, an image distance-measuring sensor, a laser distance-measuring sensor, a microwave radar distance-measuring sensor and so on.

In some embodiments, in performing the command of returning to the preset position, the controller **130** can control the electric unmanned aerial vehicle **100** to return along an original flight path or along a return path automatically planned by the controller **130** to avoid any obstacle.

A flight path of the electric unmanned aerial vehicle **100** in returning from the present position to the preset position can be any one of an original flight path, a linear path in a horizontal direction and a linear path in a vertical direction between the present position and the preset position, or a linear path between the present position and the preset position.

The flight path of the electric unmanned aerial vehicle **100** in returning from the present position to the preset position can be automatically set by the controller. Optionally, the flight path can be set by the user. In automatically setting a return path, the controller **130** can automatically select a return path according to a preset criterion, and calculate the electric capacity needed by the electric unmanned aerial vehicle **100** to return from the present position to the preset position based on the selected return path. For example, the preset criterion can comprise at least one of a path having the least electric capacity consumption, a path having the shortest return trip, or a path having the least velocity changes.

The controller **130** can be designed to satisfy various requirements. For instance, in the described embodiments, the controller **130** can comprise a microprocessor **131** for calculating a safety electric capacity needed to protect the electric unmanned aerial vehicle **100** based on a coordinate information of a present position and a coordinate information of a preset position of the electric unmanned aerial vehicle **100,** and determine a relation between the remaining capacity of the battery **140** and the safety electric capacity.

Alternatively, the controller **130** can comprise a computing unit for calculating a safety electric capacity needed to protect the electric unmanned aerial vehicle **100** based on a coordinate information of a present position and a coordinate information of a preset position of the electric unmanned aerial vehicle **100,** and a comparator for determining a relation between the remaining capacity of the battery **140** and a safety electric capacity. For example, the computing unit can be a microprocessor, a calculator integrated circuit and so on.

In obtaining the remaining capacity of the battery **140,** the controller **130** can detect the remaining capacity in real-time with an internal circuit or with an external circuit. For instance, in the described embodiments, the controller **130** can further comprise an electric capacity detecting circuit **133** for detecting the remaining capacity of the battery **140** in real-time. The controller **130** can obtain the remaining capacity of the battery **140** with the electric capacity detecting circuit **133.** The electric capacity detecting circuit **133** can be an AD sampling circuit and/or a current meter.

In some embodiments, the battery **140** can be a smart battery which is capable of automatically detecting a remaining capacity. The controller **130** can be in communication with the smart battery to obtain the remaining capacity thereof.

Advantages of the above-described electric unmanned aerial vehicle **100** can at least include:
(1) the position sensor **110** of the above-described electric unmanned aerial vehicle **100** can measure the coordinate information of the present position of the electric unmanned aerial vehicle **100** in real-time; the controller **130** can obtain the coordinate information of the present position of the electric unmanned aerial vehicle **100** in-real time, and calculate the safety electric capacity needed by the electric unmanned aerial vehicle **100** to perform a safety protection command at the present position; if the remaining capacity of the battery **140** is not greater than the safety electric capacity, the controller **130** can immediately perform a corresponding safety protection command, such that the electric unmanned aerial vehicle **100** can be protected in real-time, and an accident due to an insufficient electric capacity of the electric unmanned aerial vehicle **100** can be prevented;
(2) the controller **130** of the above-described electric unmanned aerial vehicle **100** can automatically determine whether a safety protection command is needed based on to the safety electric capacity at the present position and the remaining capacity of the battery **140**; the user is free of determining based on his/her experience, such that the above-described electric unmanned aerial vehicle **100** can be automatically protected and provided with an intelligent protection function;
(3) the position sensor **110** of the above-described electric unmanned aerial vehicle **100** can measure the coordinate information of the present position of the electric unmanned aerial vehicle **100** in real-time; the safety electric capacity can be updated in real-time based on a change in the coordinate information of the present position; the electric unmanned aerial vehicle **100** does not perform an early return flight or an early landing, such that a utilization of the battery **140** can be improved; and
(4) the controller **130** of the above-described electric unmanned aerial vehicle **100** can implement two different levels of electric capacity alarm; if the remaining capacity of the battery **140** can only support a return flight to the preset position, there is a possibility that the electric unmanned aerial vehicle **100** cannot return successfully if a normal flight is continued; in this situation, the controller **130** can automatically implement a return flight or continue the normal flight, according to the user's setting; if the remaining capacity of the battery **140** can only support a landing to the ground, the controller **130** can implement an automatic landing function.

It will be appreciated that, in the embodiments described hereinabove, the disclosed devices and methods can be implemented by various ways. For instance, the above-described device embodiments are merely schematic. For example, a division of the modules or units is merely a division in logic function, and other division manners of the modules or units can be otherwise implemented. In some instances, a plurality of units or components can be combined or integrated into another system. Optionally, some features can be omitted or not performed. Furthermore, a coupling, a direct coupling or a direct communication connection between modules can be an indirect coupling or an indirect communication connection via an interface. An indirect coupling or a communication connection between modules can be in electrical coupling, mechanical coupling or a coupling in other forms.

Units described as separate parts can or cannot be physically separated. Components shown as units can or cannot be physical units, for instance, they can be located in one place, or can be distributed into a plurality of network units. Some or all of the units can be selected to achieve the objects of the embodiments in view of actual requirements.

Various functional units described in various embodiments of the present disclosure can be integrated into one processing unit. Optionally, the various functional units can be physical individuals. Two or more of the various function units can be integrated into one unit. The integrated unit can be implemented in a form of hardware or in a form of software functional units.

If integrated units are implemented in a form of software functional units and sold or used as independent products, they can be stored in a computer readable storage medium. In this concept, the technical solution of the present disclosure, or a part of the technical solution which contributes over the prior art, or some or all of the technical solution, can be embodied in a form of a software product. The software product can be stored in a storage medium. The software product can comprise instructions which cause a computer processor to execute some or all of the processes of methods in various embodiments of the present disclosure. The above-mentioned storage medium can comprise various medium capable of storing program codes, such as a USB flash disk, a movable hard disc, a Read-Only Memory (ROM), a random access memory (RAM), a diskette or an optical disc.

The foregoing disclosure is merely illustrative of the embodiments of the disclosure but not intended to limit the scope of the disclosure. Any equivalent modifications to a structure or process flow, which are made without departing from the specification and the drawings of the disclosure, and a direct or indirect application in other relevant technical fields, shall also fall into the scope of the disclosure.

Various embodiments have been described. The present invention may also (alternatively) be described by the below numbered aspects 1 to 60:

### ASPECTS

1. An intelligent method of protecting an electric capacity for an electric unmanned aerial vehicle, said method comprising:
   obtaining a remaining capacity of a battery in real-time;
   obtaining a coordinate information of a present position of the electric unmanned aerial vehicle in real-time, and calculating a safety electric capacity needed by the electric unmanned aerial vehicle to perform a safety protection command at the present position based on the coordinate information of the present position of the electric unmanned aerial vehicle;
   determining whether the remaining capacity is greater than the safety electric capacity; and
   performing a corresponding safety protection command if the remaining capacity is not greater than the safety electric capacity.
2. The intelligent method of protecting an electric capacity for an electric unmanned aerial vehicle according to Aspect 1, wherein the safety electric capacity comprises at least one of an electric capacity needed by the electric unmanned aerial vehicle to return from the present position to a preset position, an electric capacity needed by the electric unmanned aerial vehicle to land from the present position, or an electric capacity needed by the electric unmanned aerial vehicle to deploy a safety device;
   the safety protection command comprises at least one of a command of returning to the preset position, a command of landing from the present position, or a command of deploying the safety device.
3. The intelligent method of protecting an electric capacity for an electric unmanned aerial vehicle according to Aspect 2, wherein calculating the electric capacity needed by the electric unmanned aerial vehicle to land from the present position further comprises:
   obtaining a total capacity of the battery and a time of flight of the battery, and calculating an electric capacity consumption rate of the battery under current flight parameters;
   calculating a vertical height of the electric unmanned aerial vehicle from the present position to a take-off point based on the coordinate information of the present position and a coordinate information of the take-off point;
   calculating a time needed by the electric unmanned aerial vehicle to land from the present position based on the vertical height; and
   calculating the electric capacity needed by the electric unmanned aerial vehicle to land from the present position based on (1) the electric capacity consumption rate of the battery under current flight parameters and (2) the time needed by the electric unmanned aerial vehicle to land from the present position.
4. The intelligent method of protecting an electric capacity for an electric unmanned aerial vehicle according to Aspect 3, wherein the electric capacity needed by the electric unmanned aerial vehicle to land from the present position comprises a reserved electric capacity.
5. The intelligent method of protecting an electric capacity for an electric unmanned aerial vehicle according to Aspect 2, wherein a path of the electric unmanned aerial vehicle to return from the present position to the preset position is one of an original flight path, a linear path in a horizontal direction between the present position and the preset position and a linear path in a vertical direction between the present position and the preset position, or a linear path between the present position and the preset position.
6. The intelligent method of protecting an electric capacity for an electric unmanned aerial vehicle according to Aspect 2, wherein when calculating the electric capacity needed by the electric unmanned aerial vehicle to return from the present position to the preset position, the electric unmanned aerial vehicle automatically selects a return path according to a preset criterion, and calculates an electric capacity needed by the electric unmanned aerial vehicle to return from the present position to the preset position based on the selected return path.
7. The intelligent method of protecting an electric capacity for an electric unmanned aerial vehicle according to Aspect 6, wherein the preset criterion comprises at least one of a path having the least electric capacity consumption, a path having the shortest return trip, or a path having the least velocity changes.
8. The intelligent method of protecting an electric capacity for an electric unmanned aerial vehicle according to Aspect 6, wherein the preset criterion is a path having the least electric capacity consumption, and calculating the electric capacity needed by the electric unmanned aerial vehicle to return from the present position to the preset position further comprises:
   calculating an electric capacity consumption of the electric unmanned aerial vehicle along various paths from the present position to the preset position; and
   calculating an return path electric capacity consumption of different paths, the return path electric capacity consumption comprising an electric capacity consumption corresponding to a path, and automatically selecting a path having the least return path electric capacity consumption as the return path.
9. The intelligent method of protecting an electric capacity for an electric unmanned aerial vehicle according to Aspect 2, wherein a path of the electric unmanned aerial vehicle to return from the present position to the preset position is automatically set or set by a user.
10. The intelligent method of protecting an electric capacity for an electric unmanned aerial vehicle according to Aspect 5, wherein calculating the electric capacity needed by the electric unmanned aerial vehicle to return from the present position to the preset position further comprises:
   obtaining a total capacity of the battery and a time of flight of the battery, and calculating an electric capacity consumption rate of the battery under current flight parameters;
   calculating a horizontal distance and a vertical height of the electric unmanned aerial vehicle to return from the present position to the preset position based on the coordinate information of the present position and the coordinate information of the preset position;
   calculating a time needed by the electric unmanned aerial vehicle to return from the present position to the preset position based on the horizontal distance and the vertical height; and
   calculating the electric capacity needed by the electric unmanned aerial vehicle to return from the present position to the preset position based on (1) the electric capacity consumption rate of the battery under current flight parameters, and (2) the time needed by the electric unmanned aerial vehicle to return from the present position to the preset position.
11. The intelligent method of protecting an electric capacity for an electric unmanned aerial vehicle according to Aspect 10, wherein calculating the electric capacity needed by the electric unmanned aerial vehicle to return from the present position to the preset position comprises calculating an electric capacity needed for the horizontal distance and calculating an electric capacity needed for the vertical height, the electric capacity needed for the horizontal distance comprises a first reserved electric capacity, and the electric capacity needed for the vertical height comprises a second reserved electric capacity.
12. The intelligent method of protecting an electric capacity for an electric unmanned aerial vehicle according to Aspect 5, wherein the preset position is a waypoint in a flight path which is recorded by the electric unmanned aerial vehicle, calculating the electric capacity needed by the electric unmanned aerial vehicle to return from the present position to the preset position further comprises:
   obtaining a total capacity of the battery and a time of flight of the battery, and calculating an electric capacity consumption rate of the battery under current flight parameters;
   calculating a total distance for the electric unmanned aerial vehicle to return from the present position to the preset position along the original flight path based on the coordinate information of the present position and the coordinate information of the preset position;
   calculating a time needed by the electric unmanned aerial vehicle to return from the present position to the preset position along the original flight path based on the total distance of the electric unmanned aerial vehicle to return from the present position to the preset position along the original flight path; and
   calculating an electric capacity needed by the electric unmanned aerial vehicle to return from the present position to the preset position along the original flight path based on (1) the electric capacity consumption rate of the battery under current flight parameters, and (2) the time needed by the electric unmanned aerial vehicle to return from the present position to the preset position along the original flight path.
13. The intelligent method of protecting an electric capacity for an electric unmanned aerial vehicle according to Aspect 12, wherein the electric capacity needed by the electric unmanned aerial vehicle to return from the present position to the preset position along the original flight path comprises a reserved electric capacity.
14. The intelligent method of protecting an electric capacity for an electric unmanned aerial vehicle according to Aspect 2, wherein a time needed by the electric unmanned aerial vehicle during landing is calculated based on a descending height and a descending velocity of the electric unmanned aerial vehicle; and in the process of descending, the descending velocity of the electric unmanned aerial vehicle varies at a plurality of preset heights.
15. The intelligent method of protecting an electric capacity for an electric unmanned aerial vehicle according to Aspect 14, wherein the plurality of preset heights comprise a first preset height and a second preset height; the electric unmanned aerial vehicle descends to the first preset height at a uniform velocity, gradually decelerates and descends to the second preset height, and descends to the ground at a uniform velocity.
16. The intelligent method of protecting an electric capacity for an electric unmanned aerial vehicle according to Aspect 15, wherein the first preset height and the second preset height are measured by a distance-measuring sensor carried by the electric unmanned aerial vehicle, or set by a user in advance according to the total descending height.
17. The intelligent method of protecting an electric capacity for an electric unmanned aerial vehicle according to Aspect 3, wherein the electric capacity consumption rate of the battery under the present flight parameters is be obtained by measuring the remaining capacity multiple times at a preset time interval Δt and averaging the plurality of measurements, wherein an electric capacity consumption rate at the n^{th} preset time interval Δt is (Ql-Qn) /n × Δt, where Q1 is the total capacity of the battery, and Qn is a remaining capacity of the battery as measured after the n^{th} preset time interval Δt.
18. The intelligent method of protecting an electric capacity for an electric unmanned aerial vehicle according to Aspect 2, wherein the preset position is a take-off point of the electric unmanned aerial vehicle or a target point specified by a user.
19. The intelligent method of protecting an electric capacity for an electric unmanned aerial vehicle according to Aspect 1, wherein the remaining capacity of the battery is calculated by subtracting a preset electric capacity from an actual remaining capacity of the battery, and the preset electric capacity is used as a compensation for a computing error of the safety electric capacity.
20. The intelligent method of protecting an electric capacity for an electric unmanned aerial vehicle according to Aspect 1, wherein the remaining capacity of the battery is obtained by sampling a voltage with an AD sampling circuit and/or by measuring a current with a current meter.
21. An intelligent method of protecting an electric capacity for an electric unmanned aerial vehicle, said method comprising:
   obtaining a remaining capacity of a battery in real-time;
   obtaining a coordinate information of a present position of the electric unmanned aerial vehicle in real-time, and calculating an electric capacity needed by the electric unmanned aerial vehicle to land from the present position and an electric capacity needed by the electric unmanned aerial vehicle to return from the present position to a preset position based on the coordinate information of the present position of the electric unmanned aerial vehicle and a coordinate information of the preset position;
   determining whether the remaining capacity is greater than the electric capacity needed by the electric unmanned aerial vehicle to land from the present position;
   automatically performing a command of landing from the present position if the remaining capacity is not greater than the electric capacity needed by the electric unmanned aerial vehicle to land from the present position;
   determining whether the remaining capacity is greater than the electric capacity needed by the electric unmanned aerial vehicle to return from the present position to the preset position, if the remaining capacity is greater than the electric capacity needed by the electric unmanned aerial vehicle to land from the present position; and
   continuing a normal fly if the remaining capacity is greater than the electric capacity needed by the electric unmanned aerial vehicle to return from the present position to the preset position.
22. The intelligent method of protecting an electric capacity for an electric unmanned aerial vehicle according to Aspect 21, further comprising:
   automatically performing a command of returning to the preset position or reminding a user whether to perform the command of returning to the preset position, if the remaining capacity is not greater than the electric capacity needed by the electric unmanned aerial vehicle to return from the present position to the preset position.
23. The intelligent method of protecting an electric capacity for an electric unmanned aerial vehicle according to Aspect 21, wherein calculating the electric capacity needed by the electric unmanned aerial vehicle to land from the present position further comprises:
   obtaining a total capacity of the battery and a time of flight of the battery, and calculating an electric capacity consumption rate of the battery under current flight parameters;
   calculating a vertical height of the electric unmanned aerial vehicle from the present position to a take-off point based on a coordinate information of the take-off point and the coordinate information of the present position;
   calculating a time needed by the electric unmanned aerial vehicle to land from the present position based on the vertical height; and
   calculating the electric capacity needed by the electric unmanned aerial vehicle to land from the present position based on (1) the electric capacity consumption rate of the battery under current flight parameters, (2) and the time needed by the electric unmanned aerial vehicle to land from the present position.
24. The intelligent method of protecting an electric capacity for an electric unmanned aerial vehicle according to Aspect 23, wherein the electric capacity needed by the electric unmanned aerial vehicle to land from the present position comprises a reserved electric capacity.
25. The intelligent method of protecting an electric capacity for an electric unmanned aerial vehicle according to Aspect 21 or 22, wherein a path for the electric unmanned aerial vehicle to return from the present position to the preset position is one of an original flight path, a linear path in a horizontal direction between the present position and the preset position and a linear path in a vertical direction between the present position and the preset position, or a linear path between the present position and the preset position.
26. The intelligent method of protecting an electric capacity for an electric unmanned aerial vehicle according to Aspect 25, wherein when calculating the electric capacity needed by the electric unmanned aerial vehicle to return from the present position to the preset position, the electric unmanned aerial vehicle automatically selects a return path according to a preset criterion, and calculates an electric capacity needed by the electric unmanned aerial vehicle to return from the present position to the preset position based on the selected return path.
27. The intelligent method of protecting an electric capacity for an electric unmanned aerial vehicle according to Aspect 26, wherein the preset criterion comprises at least one of a path having the least electric capacity consumption, a path having the shortest return trip, or a path having the least velocity changes.
28. The intelligent method of protecting an electric capacity for an electric unmanned aerial vehicle according to Aspect 26, wherein the preset criterion is a path having the least electric capacity consumption, the calculating the electric capacity needed by the electric unmanned aerial vehicle to return from the present position to the preset position further comprises:
   calculating an electric capacity consumption of the electric unmanned aerial vehicle along various paths from the present position to the preset position; and
   calculating an return path electric capacity consumption of different paths, the return path electric capacity consumption comprising an electric capacity consumption corresponding to a path, and automatically selecting a path having the least return path electric capacity consumption as the return path.
29. The intelligent method of protecting an electric capacity for an electric unmanned aerial vehicle according to Aspect 21, wherein a path of the electric unmanned aerial vehicle to return from the present position to the preset position is automatically set or set by a user.
30. The intelligent method of protecting an electric capacity for an electric unmanned aerial vehicle according to Aspect 25, wherein calculating the electric capacity needed by the electric unmanned aerial vehicle to return from the present position to the preset position further comprises:
   obtaining a total capacity of the battery and a time of flight of the battery, and calculating an electric capacity consumption rate of the battery under current flight parameters;
   calculating a horizontal distance and a vertical height of the electric unmanned aerial vehicle to return from the present position to the preset position based on the coordinate information of the present position and the coordinate information of the preset position;
   calculating a time needed by the electric unmanned aerial vehicle to return from the present position to the preset position based on the horizontal distance and the vertical height; and
   calculating the electric capacity needed by the electric unmanned aerial vehicle to return from the present position to the preset position based on (1) the electric capacity consumption rate of the battery under current flight parameters, and (2) the time needed by the electric unmanned aerial vehicle to return from the present position to the preset position.
31. The intelligent method of protecting an electric capacity for an electric unmanned aerial vehicle according to Aspect 30, wherein calculating the electric capacity needed by the electric unmanned aerial vehicle to return from the present position to the preset position comprises calculating an electric capacity needed for the horizontal distance and calculating an electric capacity needed for the vertical height, the electric capacity needed for the horizontal distance comprises a first reserved electric capacity, and the electric capacity needed for the vertical height comprises a second reserved electric capacity.
32. The intelligent method of protecting an electric capacity for an electric unmanned aerial vehicle according to Aspect 25, wherein the preset position is a waypoint in a flight path which is recorded by the electric unmanned aerial vehicle, and calculating the electric capacity needed by the electric unmanned aerial vehicle to return from the present position to the preset position further comprises:
   obtaining a total capacity of the battery and a time of flight of the battery, and calculating an electric capacity consumption rate of the battery under current flight parameters;
   calculating a total distance for the electric unmanned aerial vehicle to return from the present position to the preset position along the original flight path based on the coordinate information of the present position and the coordinate information of the preset position;
   calculating a time needed by the electric unmanned aerial vehicle to return from the present position to the preset position along the original flight path based on the total distance of the electric unmanned aerial vehicle to return from the present position to the preset position along the original flight path; and
   calculating an electric capacity needed by the electric unmanned aerial vehicle to return from the present position to the preset position along the original flight path based on (1) the electric capacity consumption rate of the battery under current flight parameters, and (2) the time needed by the electric unmanned aerial vehicle to return from the present position to the preset position along the original flight path.
33. The intelligent method of protecting an electric capacity for an electric unmanned aerial vehicle according to Aspect 32, wherein the electric capacity needed by the electric unmanned aerial vehicle to return from the present position to the preset position along the original flight path comprises a reserved electric capacity.
34. The intelligent method of protecting an electric capacity for an electric unmanned aerial vehicle according to Aspect 21, wherein a time needed by the electric unmanned aerial vehicle during landing is calculated based on a descending height and a descending velocity of the electric unmanned aerial vehicle; and in the process of descending, the descending velocity of the electric unmanned aerial vehicle varies at a plurality of preset heights.
35. The intelligent method of protecting an electric capacity for an electric unmanned aerial vehicle according to Aspect 34, wherein the plurality of preset heights comprise a first preset height and a second preset height; the electric unmanned aerial vehicle descends to the first preset height at a uniform velocity, gradually decelerates and descends to the second preset height, and descends to the ground at a uniform velocity.
36. The intelligent method of protecting an electric capacity for an electric unmanned aerial vehicle according to Aspect 35, wherein the first preset height and the second preset height are measured by a distance-measuring sensor carried by the electric unmanned aerial vehicle, or set by a user in advance according to a total descending height.
37. The intelligent method of protecting an electric capacity for an electric unmanned aerial vehicle according to Aspect 23, wherein the electric capacity consumption rate of the battery under the present flight parameters is obtained by measuring the remaining capacity multiple times at a preset time interval Δt and averaging the plurality of measurements, wherein an electric capacity consumption rate at the n^{th} preset time interval Δt is (Ql-Qn) /n × Δt, where Q1 is the total capacity of the battery, and Qn is a remaining capacity of the battery as measured after the n^{th} preset time interval Δt.
38. The intelligent method of protecting an electric capacity for an electric unmanned aerial vehicle according to Aspect 21, wherein the preset position is a take-off point of the electric unmanned aerial vehicle or a target point specified by a user.
39. The intelligent method of protecting an electric capacity for an electric unmanned aerial vehicle according to Aspect 21, wherein the remaining capacity of the battery is calculated by subtracting a preset electric capacity from an actual remaining capacity of the battery, and the preset electric capacity is used as a compensation for a computing error of the safety electric capacity.
40. The intelligent method of protecting an electric capacity for an electric unmanned aerial vehicle according to Aspect 21, wherein the remaining capacity of the battery is obtained by sampling a voltage with an AD sampling circuit and/or by measuring a current with a current meter.
41. An electric unmanned aerial vehicle, comprising:
   a position sensor for obtaining a coordinate information of a present position of the electric unmanned aerial vehicle in real-time;
   a memory for storing a coordinate information of a preset position of the electric unmanned aerial vehicle; and
   a controller in communication with the position sensor and the memory, and being configured to calculate a safety electric capacity needed by the electric unmanned aerial vehicle to perform a safety protection command at the present position based on the coordinate information of the present position of the electric unmanned aerial vehicle and the coordinate information of the preset position, and compare the safety electric capacity with a remaining capacity of the battery;
   wherein, if the remaining capacity of the battery is not greater than the safety electric capacity, the controller performs a corresponding safety protection command.
42. The electric unmanned aerial vehicle according to Aspect 41, wherein the position sensor comprises at least one of a GPS sensor or a height sensor.
43. The electric unmanned aerial vehicle according to Aspect 42, wherein the height sensor comprises at least one of a barometric altimeter, a laser altimeter, a radio altimeter, an ultrasound wave altimeter, or an image distance-measuring sensor.
44. The electric unmanned aerial vehicle according to Aspect 41, wherein the controller comprises a computing unit for calculating a safety electric capacity needed for protecting safely the electric unmanned aerial vehicle based on the coordinate information of the present position of the electric unmanned aerial vehicle and the coordinate information of the preset position, and a comparator for determining a relation between the remaining capacity of the battery and the safety electric capacity;
   or, the controller comprises a microprocessor configured to calculate the safety electric capacity needed for protecting the electric unmanned aerial vehicle based on (1) the coordinate information of the present position of the electric unmanned aerial vehicle and (2) the coordinate information of the preset position, and determine a relation between the remaining capacity of the battery and the safety electric capacity.
45. The electric unmanned aerial vehicle according to Aspect 41, wherein the controller further comprises an electric capacity detecting circuit for detecting the remaining capacity of the battery in real-time, and the controller obtains the remaining capacity of the battery with the electric capacity detecting circuit.
46. The electric unmanned aerial vehicle according to Aspect 45, wherein the electric capacity detecting circuit is an AD sampling circuit and/or a current meter.
47. The electric unmanned aerial vehicle according to Aspect 41, wherein the battery is a smart battery which automatically detects a remaining capacity thereof, and the controller is in communication with the smart battery to obtain the remaining capacity.
48. The electric unmanned aerial vehicle according to Aspect 41, wherein the safety electric capacity comprises at least one of an electric capacity needed by the electric unmanned aerial vehicle to return from the present position to a preset position, an electric capacity needed by the electric unmanned aerial vehicle to land from the present position, or an electric capacity needed by the electric unmanned aerial vehicle to deploy a safety device; and
   wherein the safety protection command comprise correspondingly at least one of a command of returning to the preset position, a command of landing from the present position, or a command of deploying the safety device.
49. The electric unmanned aerial vehicle according to Aspect 41, wherein the safety electric capacity comprises an electric capacity needed by the electric unmanned aerial vehicle to return from the present position to the preset position.
50. The electric unmanned aerial vehicle according to Aspect 49, wherein if the remaining capacity of the battery is not greater than the electric capacity needed by the electric unmanned aerial vehicle to return from the present position to a preset position, the controller automatically performs a command of landing from the present position.
51. The electric unmanned aerial vehicle according to Aspect 49, wherein the safety electric capacity further comprises the electric capacity needed by the electric unmanned aerial vehicle to return from the present position to a preset position; if the remaining capacity of the battery is greater than the electric capacity needed by the electric unmanned aerial vehicle to return from the present position to a preset position and greater than the electric capacity needed by the electric unmanned aerial vehicle to land from the present position, the controller controls the electric unmanned aerial vehicle to continue a normal flight.
52. The electric unmanned aerial vehicle according to Aspect 51, wherein if the remaining capacity of the battery is greater than the electric capacity needed by the electric unmanned aerial vehicle to land from the present position but not greater than the electric capacity needed by the electric unmanned aerial vehicle to return from the present position to a preset position, the controller automatically performs a command of returning to the preset position.
53. The electric unmanned aerial vehicle according to Aspect 51, further comprising a reminder module in communication with the controller; if the remaining capacity of the battery is greater than the electric capacity needed by the electric unmanned aerial vehicle to land from the present position but not greater than the electric capacity needed by the electric unmanned aerial vehicle to return from the present position to a preset position, the controller controls the reminder module to provide a prompting signal on whether to perform a return to the preset position.
54. The electric unmanned aerial vehicle according to Aspect 52, further comprising a sensor for detecting an obstacle in a preset range around the electric unmanned aerial vehicle, if the sensor detects an obstacle in the preset range around the electric unmanned aerial vehicle, the controller automatically plans a return path.
55. The electric unmanned aerial vehicle according to Aspect 54, wherein the sensor comprises at least one of an infrared distance-measuring sensor, an ultrasound wave distance-measuring sensor, an image distance-measuring sensor, a laser distance-measuring sensor, or a microwave radar distance-measuring sensor.
56. The electric unmanned aerial vehicle according to Aspect 52, wherein a path for the electric unmanned aerial vehicle to return from the present position to the preset position is one of the followings: an original flight path, a linear path in a horizontal direction and a linear path in a vertical direction between the present position and the preset position, a linear path between the present position and the preset position.
57. The electric unmanned aerial vehicle according to Aspect 56, wherein the path for the electric unmanned aerial vehicle to return to the preset position from the present position is automatically set by the controller or set by a user.
58. The electric unmanned aerial vehicle according to Aspect 57, wherein in automatically setting a return path, the controller automatically selects the return path according to a preset criterion, and calculates the electric capacity needed by the electric unmanned aerial vehicle to return from the present position to the preset position based on the selected return path.
59. The electric unmanned aerial vehicle according to Aspect 58, wherein the preset criterion comprises at least one of a path having the least electric capacity consumption, a path having the shortest return trip, or a path having the least velocity changes.
60. The electric unmanned aerial vehicle according to Aspect 41, wherein the remaining capacity of the battery is calculated by subtracting a preset electric capacity from an actual remaining capacity of the battery, the preset electric capacity is used as a compensation for a computing error of the safety electric capacity.

## Claims

1. An intelligent method of protecting an electric capacity for an electric unmanned aerial vehicle, said method comprising:
obtaining a remaining capacity of a battery in real-time;
obtaining a coordinate information of a present position of the electric unmanned aerial vehicle in real-time, and calculating an electric capacity needed by the electric unmanned aerial vehicle to land from the present position and an electric capacity needed by the electric unmanned aerial vehicle to return from the present position to a preset position based on the coordinate information of the present position of the electric unmanned aerial vehicle and a coordinate information of the preset position;
automatically performing a command of landing from the present position if the remaining capacity is not greater than the electric capacity needed by the electric unmanned aerial vehicle to land from the present position;
continuing a normal fly if the remaining capacity is greater than the electric capacity needed by the electric unmanned aerial vehicle to return from the present position to the preset position.

2. The intelligent method of protecting an electric capacity for an electric unmanned aerial vehicle according to claim 1, further comprising:
determining whether the remaining capacity is greater than the electric capacity needed by the electric unmanned aerial vehicle to land from the present position; and
determining whether the remaining capacity is greater than the electric capacity needed by the electric unmanned aerial vehicle to return from the present position to the preset position, if the remaining capacity is greater than the electric capacity needed by the electric unmanned aerial vehicle to land from the present position.

3. The intelligent method of protecting an electric capacity for an electric unmanned aerial vehicle according to claim 1 or 2, further comprising:
automatically performing a command of returning to the preset position or reminding a user whether to perform the command of returning to the preset position, if the remaining capacity is not greater than the electric capacity needed by the electric unmanned aerial vehicle to return from the present position to the preset position.

4. The intelligent method of protecting an electric capacity for an electric unmanned aerial vehicle according to claim 1 or 2, wherein calculating the electric capacity needed by the electric unmanned aerial vehicle to land from the present position further comprises:
obtaining a total capacity of the battery and a time of flight of the battery, and calculating an electric capacity consumption rate of the battery under current flight parameters;
calculating a vertical height of the electric unmanned aerial vehicle from the present position to a take-off point based on a coordinate information of the take-off point and the coordinate information of the present position;
calculating a time needed by the electric unmanned aerial vehicle to land from the present position based on the vertical height; and
calculating the electric capacity needed by the electric unmanned aerial vehicle to land from the present position based on (1) the electric capacity consumption rate of the battery under current flight parameters, (2) and the time needed by the electric unmanned aerial vehicle to land from the present position.

5. The intelligent method of protecting an electric capacity for an electric unmanned aerial vehicle according to claims 1, 2 or 3, wherein a path for the electric unmanned aerial vehicle to return from the present position to the preset position is one of an original flight path, a linear path in a horizontal direction between the present position and the preset position and a linear path in a vertical direction between the present position and the preset position, or a linear path between the present position and the preset position.

6. The intelligent method of protecting an electric capacity for an electric unmanned aerial vehicle according to claim 5, wherein when calculating the electric capacity needed by the electric unmanned aerial vehicle to return from the present position to the preset position, the electric unmanned aerial vehicle automatically selects a return path according to a preset criterion, and calculates an electric capacity needed by the electric unmanned aerial vehicle to return from the present position to the preset position based on the selected return path.

7. The intelligent method of protecting an electric capacity for an electric unmanned aerial vehicle according to claim 6, wherein the preset criterion comprises at least one of a path having the least electric capacity consumption, a path having the shortest return trip, or a path having the least velocity changes.

8. The intelligent method of protecting an electric capacity for an electric unmanned aerial vehicle according to claim 6, wherein the preset criterion is a path having the least electric capacity consumption, the calculating the electric capacity needed by the electric unmanned aerial vehicle to return from the present position to the preset position further comprises:
calculating an electric capacity consumption of the electric unmanned aerial vehicle along various paths from the present position to the preset position; and
calculating an return path electric capacity consumption of different paths, the return path electric capacity consumption comprising an electric capacity consumption corresponding to a path, and automatically selecting a path having the least return path electric capacity consumption as the return path.

9. The intelligent method of protecting an electric capacity for an electric unmanned aerial vehicle according to claim 1 or 2, wherein a path of the electric unmanned aerial vehicle to return from the present position to the preset position is automatically set or set by a user.

10. The intelligent method of protecting an electric capacity for an electric unmanned aerial vehicle according to claim 5, wherein calculating the electric capacity needed by the electric unmanned aerial vehicle to return from the present position to the preset position further comprises:
obtaining a total capacity of the battery and a time of flight of the battery, and calculating an electric capacity consumption rate of the battery under current flight parameters;
calculating a horizontal distance and a vertical height of the electric unmanned aerial vehicle to return from the present position to the preset position based on the coordinate information of the present position and the coordinate information of the preset position;
calculating a time needed by the electric unmanned aerial vehicle to return from the present position to the preset position based on the horizontal distance and the vertical height; and
calculating the electric capacity needed by the electric unmanned aerial vehicle to return from the present position to the preset position based on (1) the electric capacity consumption rate of the battery under current flight parameters, and (2) the time needed by the electric unmanned aerial vehicle to return from the present position to the preset position.

11. The intelligent method of protecting an electric capacity for an electric unmanned aerial vehicle according to claim 10, wherein calculating the electric capacity needed by the electric unmanned aerial vehicle to return from the present position to the preset position comprises calculating an electric capacity needed for the horizontal distance and calculating an electric capacity needed for the vertical height, the electric capacity needed for the horizontal distance comprises a first reserved electric capacity, and the electric capacity needed for the vertical height comprises a second reserved electric capacity.

12. The intelligent method of protecting an electric capacity for an electric unmanned aerial vehicle according to claim 5, wherein the preset position is a waypoint in a flight path which is recorded by the electric unmanned aerial vehicle, and calculating the electric capacity needed by the electric unmanned aerial vehicle to return from the present position to the preset position further comprises:
obtaining a total capacity of the battery and a time of flight of the battery, and calculating an electric capacity consumption rate of the battery under current flight parameters;
calculating a total distance for the electric unmanned aerial vehicle to return from the present position to the preset position along the original flight path based on the coordinate information of the present position and the coordinate information of the preset position;
calculating a time needed by the electric unmanned aerial vehicle to return from the present position to the preset position along the original flight path based on the total distance of the electric unmanned aerial vehicle to return from the present position to the preset position along the original flight path; and
calculating an electric capacity needed by the electric unmanned aerial vehicle to return from the present position to the preset position along the original flight path based on (1) the electric capacity consumption rate of the battery under current flight parameters, and (2) the time needed by the electric unmanned aerial vehicle to return from the present position to the preset position along the original flight path.

13. The intelligent method of protecting an electric capacity for an electric unmanned aerial vehicle according to claim 1 or 2, wherein a time needed by the electric unmanned aerial vehicle during landing is calculated based on a descending height and a descending velocity of the electric unmanned aerial vehicle; and in the process of descending, the descending velocity of the electric unmanned aerial vehicle varies at a plurality of preset heights.

14. The intelligent method of protecting an electric capacity for an electric unmanned aerial vehicle according to claim 4, wherein the electric capacity consumption rate of the battery under the present flight parameters is obtained by measuring the remaining capacity multiple times at a preset time interval Δt and averaging the plurality of measurements, wherein an electric capacity consumption rate at the n^{th} preset time interval Δt is (Ql-Qn) /n × Δt, where Q1 is the total capacity of the battery, and Qn is a remaining capacity of the battery as measured after the n^{th} preset time interval Δt.

15. An electric unmanned aerial vehicle, comprising:
a position sensor for obtaining a coordinate information of a present position of the electric unmanned aerial vehicle in real-time;
a memory for storing a coordinate information of a preset position of the electric unmanned aerial vehicle; and
a controller in communication with the position sensor and the memory, and being configured to calculate a safety electric capacity needed by the electric unmanned aerial vehicle to perform a safety protection command at the present position based on the coordinate information of the present position of the electric unmanned aerial vehicle and the coordinate information of the preset position, and compare the safety electric capacity with a remaining capacity of the battery, wherein the safety electric capacity comprises at least one of an electric capacity needed by the electric unmanned aerial vehicle to return from the present position to a preset position, an electric capacity needed by the electric unmanned aerial vehicle to land from the present position, or an electric capacity needed by the electric unmanned aerial vehicle to deploy a safety device;
wherein, if the remaining capacity of the battery is not greater than the safety electric capacity, the controller performs a corresponding safety protection command,
wherein the safety protection command comprise correspondingly at least one of a command of returning to the preset position, a command of landing from the present position, or a command of deploying the safety device.
